# EUROPEAN PATENT APPLICATION

(11) **EP 4 580 014 A1**
(43) Date of publication of application: **02.07.2025**
(21) Application number: 23857022.0
(22) Date of filing: 13.07.2023
(51) Int. Cl.: H02K 15/12

(54) **METHOD FOR PRODUCING STATOR FOR ROTARY ELECTRIC MACHINE**

(30) Priority: 24.08.2022 JP 2022133532
(71) Applicant: AISIN CORPORATION, Kariya-shi, Aichi 448-8650 (JP)
(72) Inventor: ITO, Madoka, Kariya-shi, Aichi 448-8650 (JP); GOTO, Yuichiro, Kariya-shi, Aichi 448-8650 (JP); HUANG, Xiaotao, Kariya-shi, Aichi 448-8650 (JP); ONO, Hiroyuki, Kariya-shi, Aichi 448-8650 (JP)
(74) Representative: TBK
(86) International application number: PCT/JP2023/025894
(87) International publication number: WO 2024/042905

(57) **Abstract**

A method for manufacturing a stator for a rotary electric machine is disclosed. The method includes: a preparation step for preparing a workpiece in which a plurality of coil pieces forming a stator coil is attached to a stator core, the workpiece having tips of one of the coil pieces and another of the coil pieces joined together on one axial end side; an immersion step for immersing, after the preparation step, the workpiece in a bath of a liquid resin material so that an impregnation target area including a joint between the tips is immersed; and a rotation step for rotating, after the immersion step, the workpiece at a raised position of the workpiece where the impregnation target area is separated from the bath. The rotation step includes rotating the workpiece about a workpiece central axis corresponding to a stator central axis in a posture of the workpiece in which the impregnation target area is oriented in a direction intersecting a vertical direction.

## Description

### TECHNICAL FIELD

The present disclosure relates to a method for manufacturing a stator for a rotary electric machine.

### BACKGROUND ART

There is known a method for manufacturing a stator for a rotary electric machine in which a workpiece for a rotary electric machine to which a plurality of coil pieces is attached to form a stator coil on a stator core is prepared, the tips of the plurality of coil pieces are joined together on one axial end side of the workpiece, an impregnation target area including the joined portions (exposed conductor portions) is impregnated with a liquid resin material, and the liquid resin material is then cured, thereby covering the joined portions with an insulating coating of the resin material.

### Related Art Documents

### Patent Documents

Patent Document 1: Japanese Unexamined Patent Application Publication No. 2021-136787 (JP 2021-136787 A)

### SUMMARY OF THE INVENTION

### Problem to be Solved by the Invention

In this type of manufacturing method including forming the insulating coating of the resin material, it is difficult to efficiently reduce dripping (dripping related to the liquid resin material) after the workpiece immersed in a bath of the liquid resin material is lifted.

In one aspect, an object of the present disclosure is to efficiently reduce dripping after a workpiece is lifted from a bath.

### Means for Solving the Problem

One aspect provides a method for manufacturing a stator for a rotary electric machine. The method includes:
a preparation step for preparing a workpiece in which a plurality of coil pieces forming a stator coil is attached to a stator core, the workpiece having tips of one of the coil pieces and another of the coil pieces joined together on one axial end side;
an immersion step for immersing, after the preparation step, the workpiece in a bath of a liquid resin material so that an impregnation target area including a joint between the tips is immersed; and
a rotation step for rotating, after the immersion step, the workpiece at a raised position of the workpiece where the impregnation target area is separated from the bath.
The rotation step includes rotating the workpiece about a workpiece central axis corresponding to a stator central axis in a posture of the workpiece in which the impregnation target area is oriented in a direction intersecting a vertical direction.

### Effects of the Invention

In one aspect, according to the present disclosure, it is possible to efficiently reduce the dripping after the workpiece is lifted from the bath.

### BRIEF DESCRIPTION OF THE DRAWINGS

[FIG. 1] FIG. 1 is a schematic flowchart showing an example of a method for manufacturing a stator for a rotary electric machine.
[FIG. 2] FIG. 2 is a diagram schematically showing an entire workpiece for forming the stator for the rotary electric machine.
[FIG. 3] FIG. 3 is a sectional view taken along an axial direction of the workpiece in a state in which coil pieces are attached to a stator core.
[FIG. 4] FIG. 4 is a front view of one coil piece.
[FIG. 5] FIG. 5 is a schematic sectional view of the coil piece.
[FIG. 6] FIG. 6 is an explanatory diagram of a joined portion, corresponding to an enlarged view of part Q1 in FIG. 2.
[FIG. 7] FIG. 7 is a diagram schematically showing, in side view, the workpiece before it is immersed in a bath of a liquid resin material.
[FIG. 8] FIG. 8 is a diagram schematically showing, in side view, the workpiece immersed in the bath of the liquid resin material.
[FIG. 9] FIG. 9 is a diagram schematically showing, in side view, the state of the workpiece in a rotation step in the immersed state.
[FIG. 9A] FIG. 9A is an enlarged view of part Q9 in FIG. 9.
[FIG. 9B] FIG. 9B is a sectional view taken along line 9A-9A in FIG. 9A, and is a diagram schematically showing a state immediately after immersion (state before the start of the rotation step in the immersed state).
[FIG. 9C] FIG. 9C is a sectional view taken along line 9A-9A in FIG. 9A, and is a diagram schematically showing a state after execution of the rotation step in the immersed state.
[FIG. 10] FIG. 10 is a diagram schematically showing, in side view, the state of the workpiece that has undergone a lifting step up to the vicinity of a liquid surface.
[FIG. 11] FIG. 11 is a diagram schematically showing, in side view, the workpiece during a liquid-draining rotation step.
[FIG. 12] FIG. 12 is an explanatory diagram of actions of the liquid-draining rotation step.
[FIG. 12A] FIG. 12A is an explanatory diagram of a preferable rotation direction in the liquid-draining rotation step.
[FIG. 13] FIG. 13 is a diagram schematically showing, in side view, the state of the workpiece that has been lifted further upward from the position during the liquid-draining rotation step.
[FIG. 14] FIG. 14 is a diagram schematically showing, in side view, the state of the workpiece in an obliquely downward posture.
[FIG. 15] FIG. 15 is a diagram schematically showing, in side view, the state of the workpiece in the obliquely downward posture that is undergoing a re-adhesion rotation step.
[FIG. 16A] FIG. 16A is an explanatory diagram (part 1) of actions of the re-adhesion rotation step.
[FIG. 16B] FIG. 16B is an explanatory diagram (part 2) of the actions of the re-adhesion rotation step.
[FIG. 16C] FIG. 16C is an explanatory diagram (part 3) of the actions of the re-adhesion rotation step.
[FIG. 17] FIG. 17 is a diagram schematically showing, in side view, the state of the workpiece in an obliquely downward posture with a relatively large inclination angle.
[FIG. 18] FIG. 18 is a diagram schematically showing, in side view, the state of the workpiece in an obliquely upward posture.
[FIG. 18A] FIG. 18A is an explanatory diagram (part 1) of a preferable range of an angle α for the workpiece in the obliquely upward posture.
[FIG. 18B] FIG. 18B is an explanatory diagram (part 2) of the preferable range of the angle α for the workpiece in the obliquely upward posture.
[FIG. 19] FIG. 19 is a diagram schematically showing, in side view, the workpiece in an upward posture.
[FIG. 20] FIG. 20 is a diagram schematically showing, in side view, the workpiece that is undergoing upper surface resin curing treatment.
[FIG. 21] FIG. 21 is a diagram schematically showing, in side view, the workpiece that is undergoing radially inner resin curing treatment.
[FIG. 22] FIG. 22 is a diagram schematically showing, in side view, the state of the workpiece before the second insulating coating step.
[FIG. 23] FIG. 23 is a diagram schematically showing, in side view, the state of the workpiece in a heating step.
[FIG. 24] FIG. 24 is a diagram schematically showing an example of a cooling structure.
[FIG. 25] FIG. 25 is a schematic flowchart showing another example of the method for manufacturing the stator for the rotary electric machine.
[FIG. 26] FIG. 26 is an explanatory diagram of adherents of the liquid resin material on the stator core.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

The method for manufacturing a stator for a rotary electric machine to be described below can be applied to any stator for a rotary electric machine as long as it has joined portions of coil pieces at a coil end portion. As a suitable application example, a method for manufacturing a stator for a rotary electric machine that can function as a power source that generates a propulsive force for a vehicle will be described below.

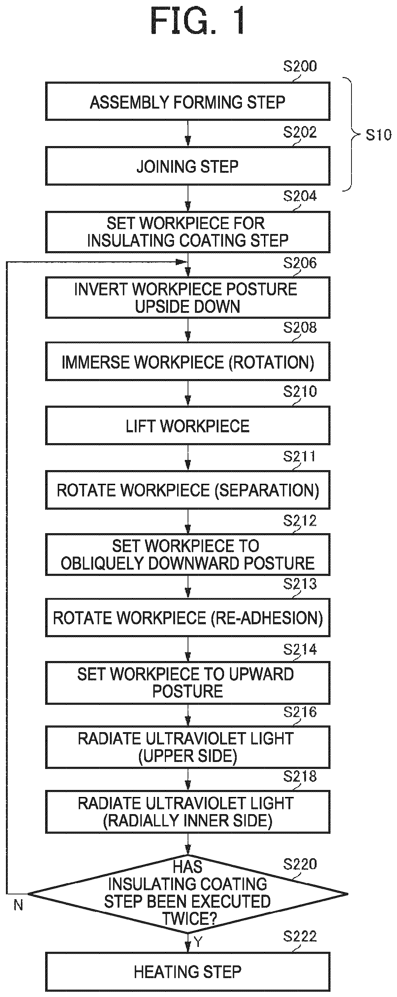

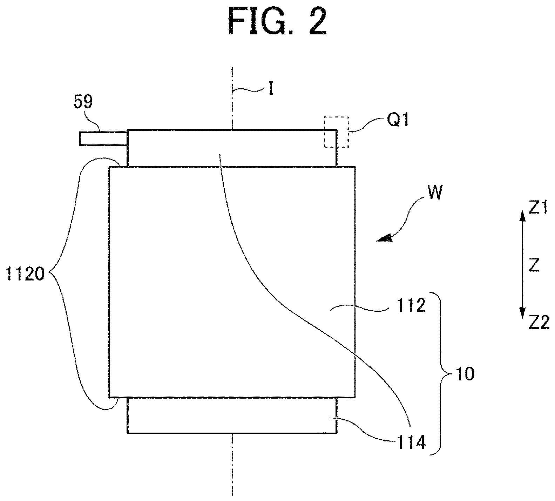

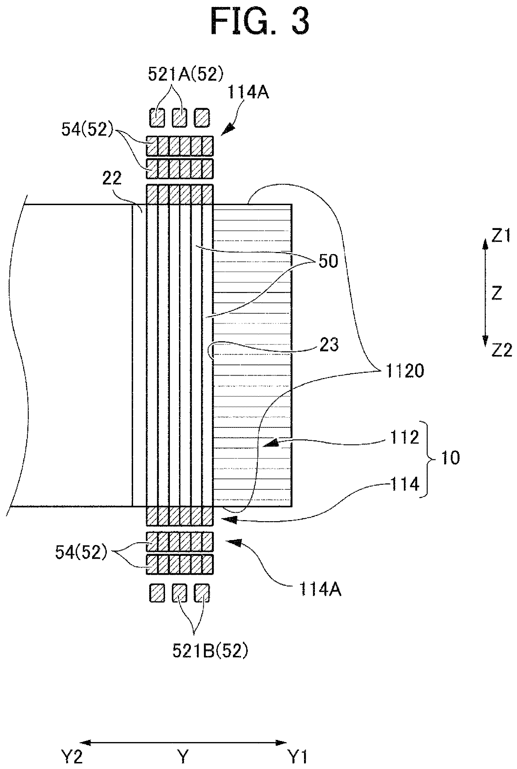

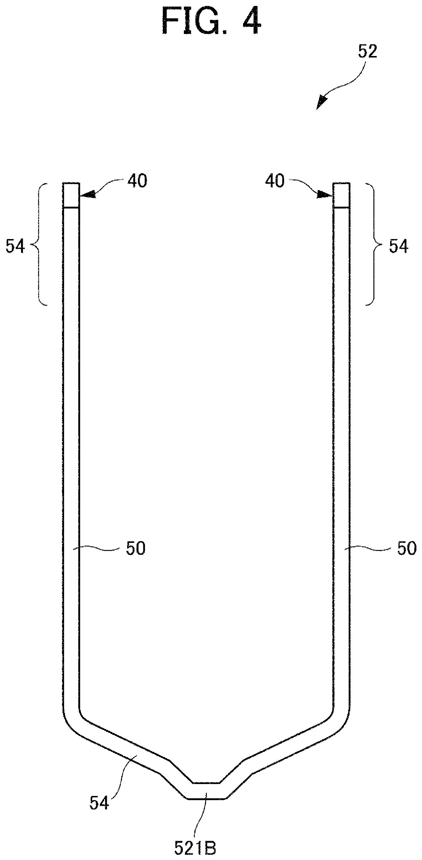

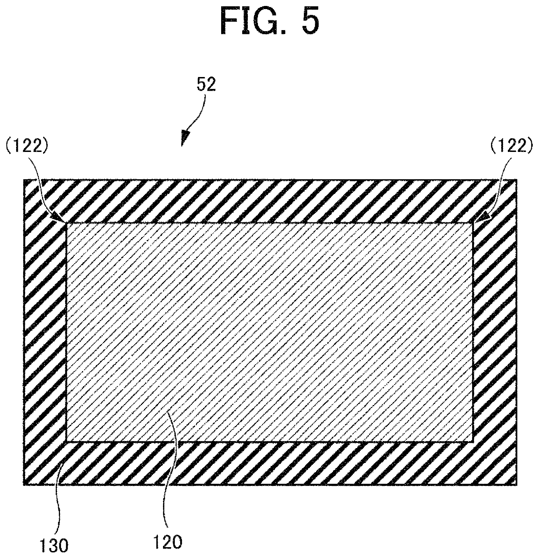

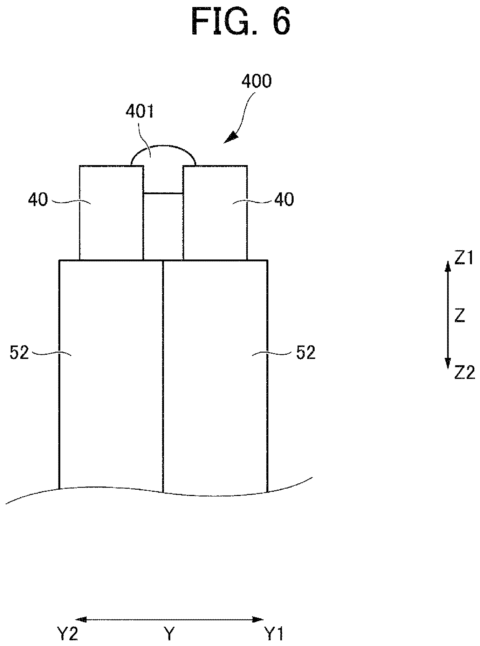

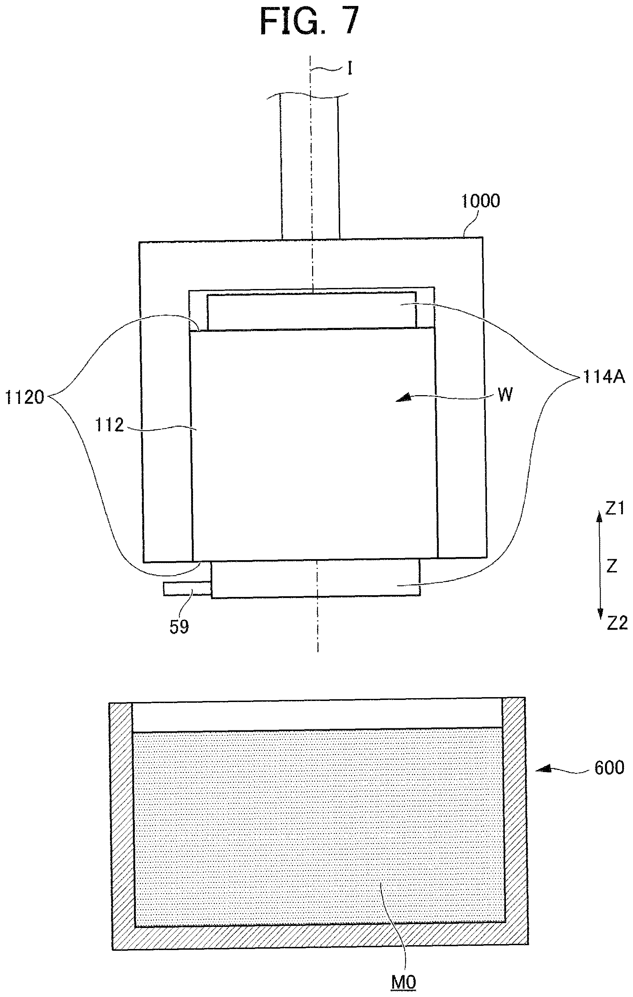

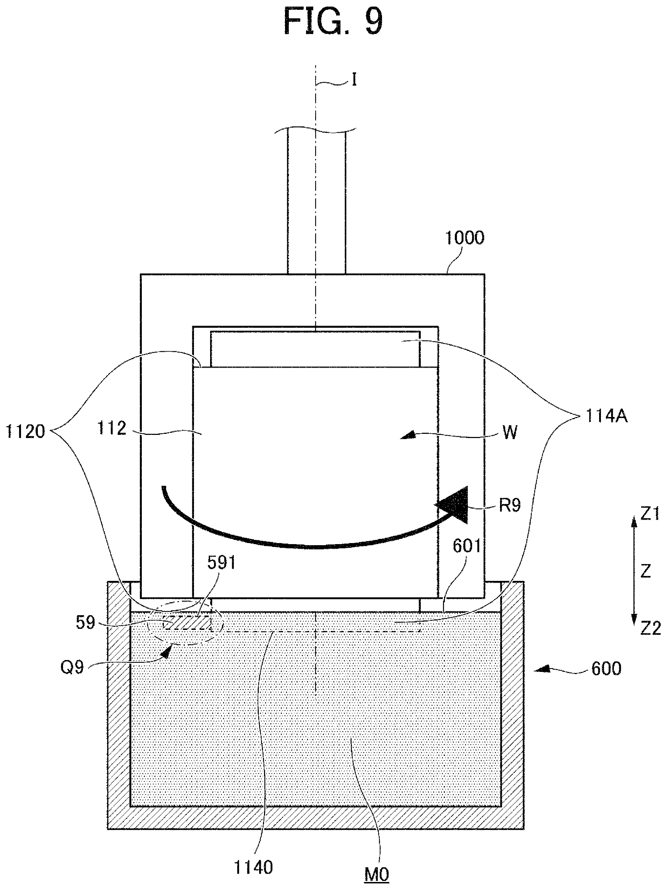

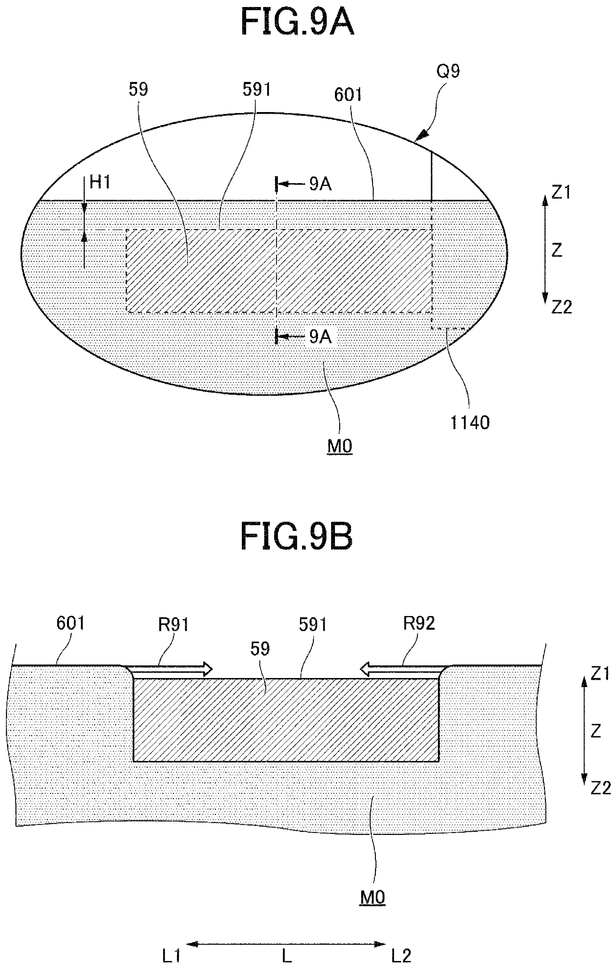

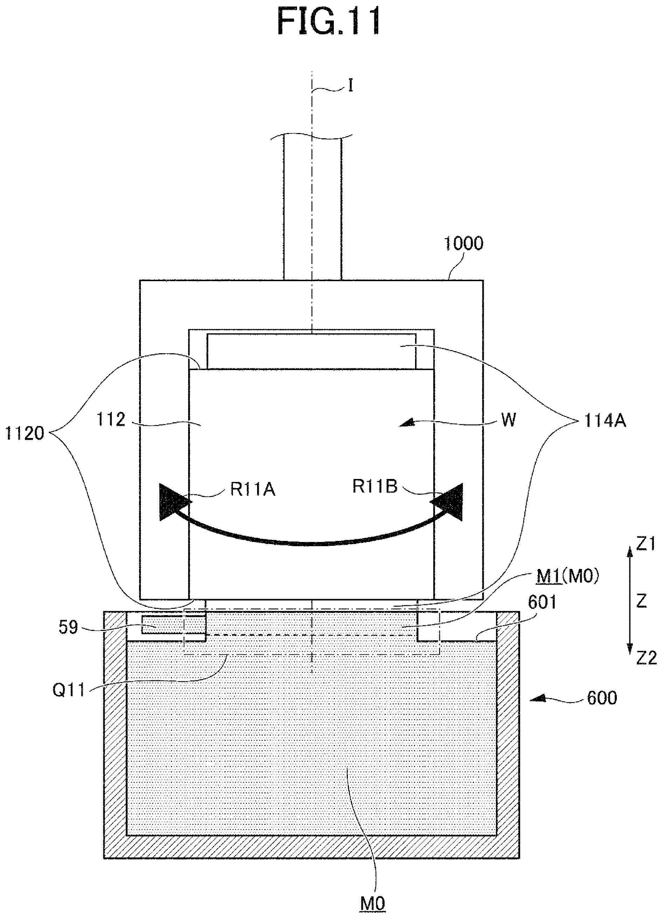

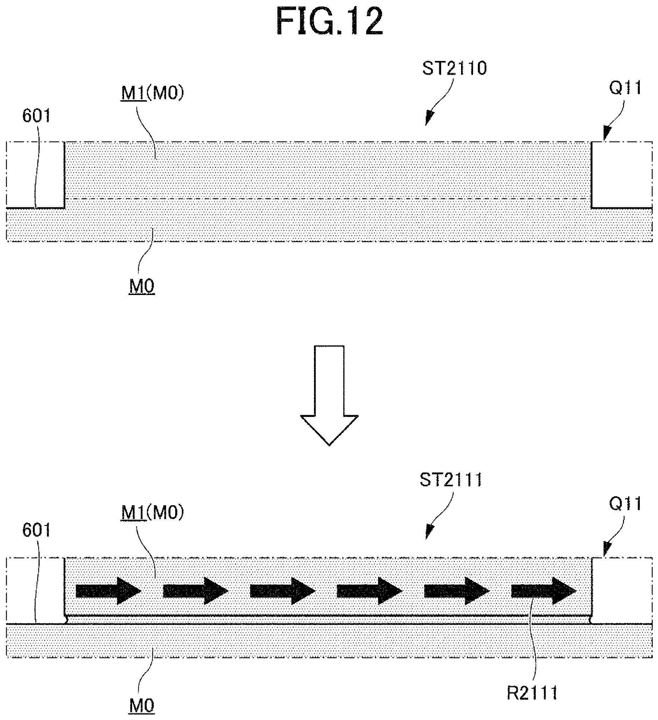

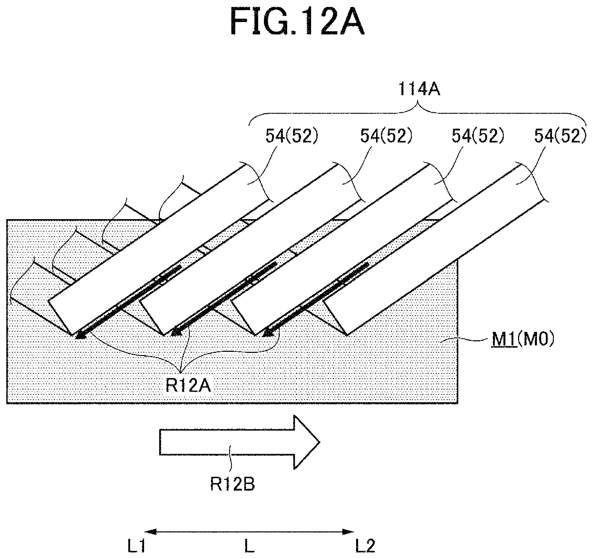

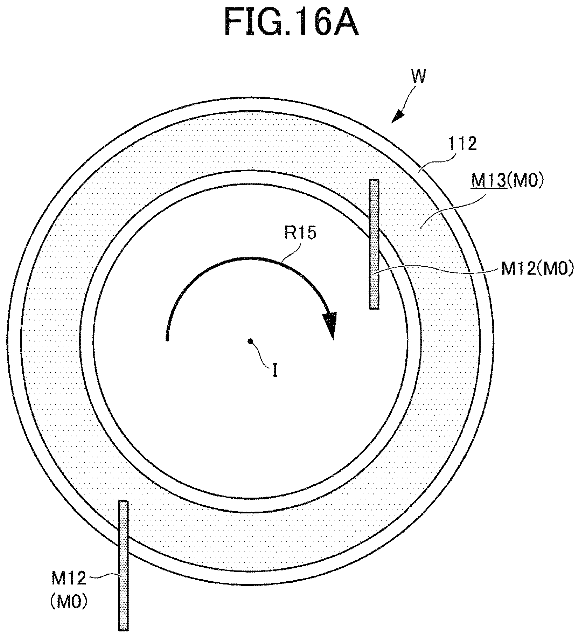

FIG. 1 is a schematic flowchart showing an example of the method for manufacturing the stator for the rotary electric machine. FIG. 1 is a flowchart showing a schematic flow, and further additional steps may be included at any stage. FIGS. 2 to 6 are explanatory diagrams of a workpiece W. FIG. 2 is a diagram schematically showing the entire workpiece W including a stator core 112 and a stator coil 114 for forming a stator 10 for a rotary electric machine. FIG. 3 is a sectional view taken along an axial direction of the workpiece W in a state in which coil pieces 52 are attached to the stator core 112. FIG. 4 is a front view of one coil piece 52 out of the plurality of coil pieces 52. FIG. 5 is a schematic sectional view of the coil piece 52. FIG. 6 is an explanatory diagram of a joined portion 400, corresponding to an enlarged view of part Q1 in FIG. 2. FIGS. 7 to 18 are explanatory diagrams of this manufacturing method. FIGS. 7 to 9, 10, 11, 13 to 15, and 17 to 22 are diagrams schematically showing, in side view, the states of the workpiece W in individual steps, etc. FIGS. 9A to 9C are explanatory diagrams of actions of a rotation step in an immersed state. FIG. 12 is an explanatory diagram illustrating actions of a liquid-draining rotation step at part Q11 in FIG. 11. FIG. 12A is an explanatory diagram of a preferable rotation direction in the liquid-draining rotation step, and is a diagram schematically showing, in side view, part of a coil end portion 114A. FIGS. 16A to 16C are explanatory diagrams of actions of the rotation step.

FIG. 2 etc. show a Z direction. The Z direction corresponds to the vertical direction, and a Z1 side and a Z2 side correspond to the upper side and the lower side, respectively. FIG. 3 etc. show a Y direction. The Y direction corresponds to the radial direction, a Y1 side corresponds to the radially outer side, and a Y2 side is the radially inner side (side closer to a central axis I of the stator core 112).

In the following description, unless otherwise specified, the axial direction refers to a direction in which the central axis I of the stator core 112 (= the central axis of the workpiece W) extends, and the radial direction refers to a radial direction about the central axis I. Therefore, the radially outer side refers to a side away from the central axis I, and the radially inner side refers to a side closer to the central axis I. An axially outer side refers to a side away from the axial center of the stator core 112, and an axially inner side refers to a side closer to the axial center of the stator core 112. A circumferential direction corresponds to a rotation direction about the central axis I.

This manufacturing method first includes a preparation step (step S10) prior to an insulating coating step. In the present embodiment, the preparation step (step S10) includes an assembly forming step (step S200) and a joining step (step S202). In modifications, a workpiece that has already undergone the assembly forming step (step S200) may be used (prepared), or a workpiece that has already undergone the assembly forming step (step S200) and the joining step (step S202) may be used (prepared).

The assembly forming step (step S200) includes forming an assembly (hereinafter also referred to as "workpiece W") by attaching a plurality of coil pieces 52 that forms the stator coil 114 on the stator core 112.

The stator coil 114 includes a U-phase coil, a V-phase coil, and a W-phase coil (hereinafter referred to as "phase coils" when the phases U, V, and W are not distinguished from each other). The proximal end of each phase coil is connected to an input terminal (not shown). The distal end of each phase coil is connected to the distal ends of the other phase coils to form a neutral point. That is, the stator coil 114 is connected in a star connection. However, the manner of connection of the stator coil 114 may be changed as appropriate according to the required motor characteristics etc. For example, the stator coil 114 may be connected in a delta connection instead of the star connection.

Each phase coil of the stator coil 114 may be formed by coupling a plurality of coil pieces 52. The coil pieces 52 are in the form of segment coils (segment conductors) obtained by dividing the phase coils into units that are easy to attach (e.g., units each to be inserted into two slots 23). As shown in FIG. 5, the coil piece 52 is formed by coating a linear conductor (rectangular wire) 120 having a substantially rectangular cross section with an insulating film 130. As an example, the linear conductor 120 is made of copper. In a modification, the linear conductor 120 may be made of a different conductor material such as iron. The sectional shape of the linear conductor 120 may be other than a rectangle.

In the example shown in FIG. 4, one coil piece 52 may be formed in a substantially U-shape having a pair of linear slot insertion portions 50 and an overhang portion 54 connecting the pair of slot insertion portions 50. An overhang portion 54 on the other side in the axial direction (upper side in FIG. 4) may be formed by forming in the circumferential direction from the state shown in FIG. 4. Coupling portions 40 to be joined to the coupling portions 40 of the overhang portion 54 of other coil pieces 52 are set at the ends of the overhang portion 54 on the other side in the axial direction (upper side in FIG. 4). The coupling portions 40 are portions where the insulating film 130 has been removed (i.e., portions where conductor portions related to the linear conductor 120 are exposed).

When attaching the coil piece 52 on the stator core 112, the pair of slot insertion portions 50 is inserted into the slots 23 between teeth 22 (see FIG. 3). In this case, the coil piece 52 can be attached in, for example, the axial direction.

A plurality of slot insertion portions 50 of the coil pieces 52 shown in FIG. 4 is inserted into one slot 23 side by side in the radial direction. A plurality of overhang portions 54 extending in the circumferential direction is thus located side by side in the radial direction at both axial ends of the stator core 112. The overhang portions 54 (and the coupling portions 40 that are part thereof) form coil end portions 114A that are portions protruding axially outward from axial end faces 1120 of the stator core 112 (see FIG. 3). The coil pieces 52 may be attached to the stator core 112, for example, by lap winding. In the example shown in FIG. 4, the lower overhang portion 54 may have an offset portion 521B that offsets the coil piece 52 by one layer in a radially separating direction. The upper overhang portion 54 may have the same offset portion 521A (see FIG. 3).

Although the stator core 112 and the stator coil 114 that have a specific structure are shown in FIGS. 2 to 5, the stator core 112 and the stator coil 114 may have any structure as long as the stator coil 114 has the coupling portions 40. The stator coil 114 may also be wound in any manner, and may be wound in a manner other than the lap winding mentioned above, such as wave winding.

The joining step (step S202) includes joining the coupling portions 40 that are the tips of one coil piece 52 and another coil piece 52 on one axial end side of the workpiece W. The coupling portions 40 may overlap each other and their facing sides may be joined together. The coupling portions 40 may be joined together by any method. For example, welding may be used. In this case, the welding may be achieved by any method such as laser welding or TIG welding. FIG. 6 schematically shows the joined portion 400 including a welded portion 401 (joint) formed between two coupling portions 40 overlapping each other in the radial direction.

For example, when four or more coil pieces 52 are attached to each slot 23 of the stator core 112 in a radially overlapping manner, the joining step may include joining a plurality of pairs in the radial direction assuming two radially adjacent coupling portions 40 (tips) as one pair.

The joining range of the coupling portions 40 and the postures of the coupling portions 40 to be joined (postures for overlapping) are set in any way. For example, in FIG. 6, the coupling portions 40 overlap each other in the radial direction while standing upright in the vertical direction, but may overlap each other while crossing each other in an X-shape when viewed in the radial direction, or only the coupling portions 40 may overlap each other in the radial direction in oblique postures. The coupling portions 40 may overlap each other in the axial direction in radially extending postures.

In the joining step, not only the joining of the coil pieces 52 but also the joining of the coil pieces 52 to a busbar or a terminal block (output busbar for connection to an inverter (not shown)) may be achieved. FIG. 2 schematically shows a neutral busbar 59 as an example of such a busbar. The neutral busbar 59 is a busbar that forms the neutral point described above.

In the present embodiment, as an example, the joined portion 400 is provided only on one axial side of the stator core 112. In the following, for the sake of distinction, the side having the joined portion 400 out of both axial sides of the stator core 112 (or both axial sides of the workpiece W) will also be referred to as a lead side. In a modification, the joined portions 400 may be provided on both axial sides of the stator core 112.

After the preparation step (step S10), this manufacturing method includes a step (step S204) of setting the workpiece W at a start position (workpiece loading position) for the insulating coating step. At this time, the workpiece W may be set in a posture in which the lead side is the upper side (i.e., the joined portion 400 is on the upper side). Hereinafter, the posture in which the lead side is the upper side will also be referred to as "upward posture of workpiece W."

Next, this manufacturing method includes, as a first step of the insulating coating step, an upside-down inversion step (step S206) in which the posture of the workpiece W is inverted upside down. That is, the workpiece W is inverted upside down into a posture in which the lead side is the lower side (i.e., the joined portion 400 is on the lower side). Hereinafter, the posture in which the lead side is the lower side will also be referred to as "downward posture of workpiece W." The upside-down inversion of the posture of the workpiece W may be achieved by a manufacturing device. The manufacturing device may be, for example, an articulated robot having a hand for gripping the workpiece W, and a workpiece gripping portion 1000 that is part of the manufacturing device is shown in FIG. 7 etc. described later.

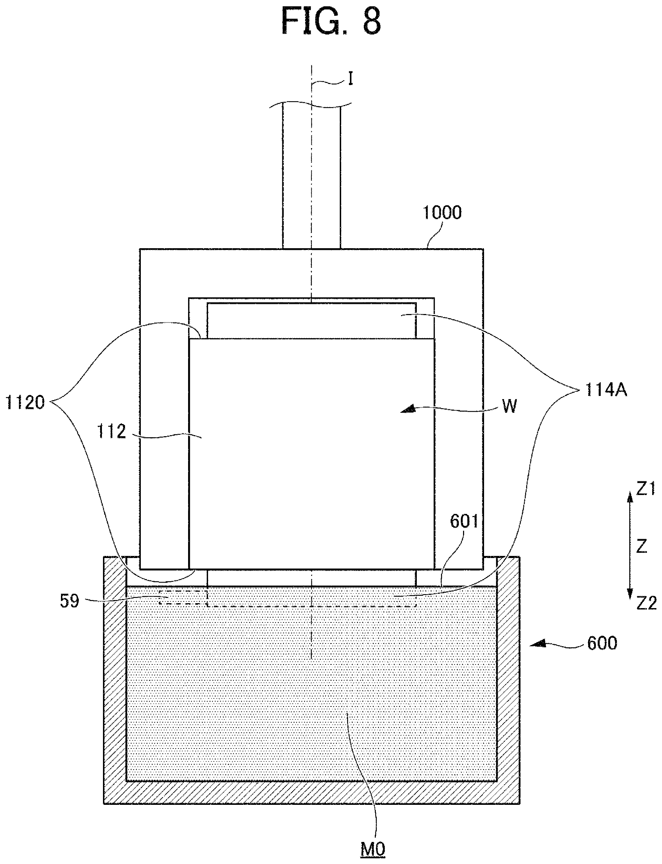

Next, this manufacturing method includes an immersion step (step S208) in which the workpiece W is immersed in a bath 600 of a liquid resin material M0. FIG. 7 is a diagram schematically showing, in side view, the workpiece W before it is immersed in the bath 600 of the liquid resin material M0. FIG. 8 is a diagram schematically showing, in side view, the workpiece W immersed in the bath 600 of the liquid resin material M0. In this manufacturing method, the liquid resin material M0 is, as a preferable example, a resin material having characteristics that it is cured by heating and also cured by a polymerization reaction when irradiated with ultraviolet light. The liquid resin material M0 has a relatively high viscosity of, for example, more than 10 Pa·s, and preferably a viscosity of 20 Pa·s or more. The bath 600 may have an annular shape conforming to an annular impregnation target area in top view.

The immersion step is executed while the workpiece W is maintained in the downward posture so that the impregnation target area at the axial end of the workpiece W (lower end in the downward posture) is immersed in the liquid resin material M0 (i.e., positioned below a liquid surface 601 of the liquid resin material M0). The impregnation target area of the workpiece W is set at portions of the plurality of coil pieces 52 of the workpiece W. Specifically, the impregnation target area of the workpiece W is the axial ends (lead side ends) of the plurality of coil pieces 52, and includes the joined portions 400. More specifically, the impregnation target area of the workpiece W includes portions of each coil piece 52 of the workpiece W where the conductors (conductor portions related to the linear conductor) are exposed (portions including the joined portions 400). The impregnation target area has an annular shape about the central axis I when viewed in the axial direction, and includes part of the coil end portion 114A (part on the axial end side).

**In** this manufacturing method, the impregnation target area is set to include the neutral busbar 59. In this case, the neutral busbar 59 is wrapped in the liquid resin material M0, thereby ensuring electrical insulation of the neutral busbar 59. That is, the neutral busbar 59 need not have an insulating coating by insert molding etc. with an insulating material such as a resin material in advance, but can be in the form of sheet metal (with the entire conductor material exposed). Thus, it is possible to efficiently ensure the electrical insulation of the neutral busbar 59.

In this manufacturing method, the immersion step is executed twice for one workpiece W as described later. In this case, the impregnation target area of the workpiece W in each immersion step may be completely the same or may be partially different. In a modification, the immersion step may be executed once or three times or more for one workpiece W.

In the immersion step, the workpiece W may be maintained in an immersed state in the downward posture for a predetermined period by the workpiece gripping portion 1000 of the manufacturing device.

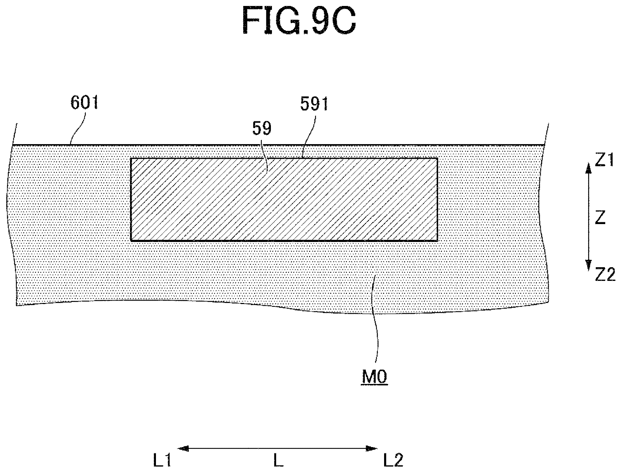

In this manufacturing method, the immersion step includes a rotation step (see arrow R9 in FIG. 9) in which the workpiece W in the immersed state (in the downward posture) is rotated about the central axis I. Hereinafter, the rotation step executed during the immersion step will also be referred to as "rotation step in immersed state" for the sake of distinction from other rotation steps described later.

FIGS. 9 to 9C are explanatory diagrams of the rotation step in the immersed state. FIG. 9 is a diagram schematically showing, in side view, the workpiece W during the rotation step in the immersed state. FIG. 9A is an enlarged view of part Q9 in FIG. 9. FIGS. 9B and 9C are sectional views taken along line 9A-9A in FIG. 9A. FIG. 9B schematically shows a state immediately after immersion (state before the start of the rotation step in the immersed state). FIG. 9C schematically shows a state after execution of the rotation step in the immersed state. In FIGS. 9B and 9C, an L direction corresponds to the circumferential direction of the workpiece W, and L1 and L2 represent opposite sides to each other (one circumferential side and the other circumferential side).

The rotation step in the immersed state is executed to efficiently wrap the neutral busbar 59 in the liquid resin material M0. In the present embodiment, the neutral busbar 59 extends in the circumferential direction while the direction perpendicular to an upper surface 591 is parallel to the central axis I, and is electrically insulated by being covered with the liquid resin material M0 as described above. The neutral busbar 59 may be located at any position relative to the coil end portion 114A, and may be, for example, joined to the stator coil 114 to extend axially outward beyond the coil end portion 114A. In the present embodiment, the neutral busbar 59 is joined to the stator coil 114 in a relationship in which the upper surface 591 in the downward posture (hereinafter also simply referred to as "upper surface 591 ") is positioned between an axial end face 1140 of the stator coil 114 and the axial end face 1120 of the stator core 112 in the Z direction as schematically shown in FIG. 9 etc. In this case, the size of the stator 10 for the rotary electric machine in the axial direction can be reduced. The axial end face 1140 of the stator coil 114 corresponds to the axial end face of the coil end portion 114A.

When the neutral busbar 59 is wrapped in the liquid resin material M0 in this manner, efficiently guiding the liquid resin material M0 onto the upper surface 591 of the neutral busbar 59 is effective in reducing the CT (Cycle Time).

When the upper surface 591 of the neutral busbar 59 is located on the Z1 side (upper side in the downward posture) of the axial end face 1140 of the stator coil 114 as in the present embodiment, the boundary of the impregnation target area on the Z1 side tends to be determined by the upper surface 591 of the neutral busbar 59. For example, the boundary of the impregnation target area on the Z1 side is set slightly on the Z1 side of the upper surface 591 of the neutral busbar 59. In this manner of setting the impregnation target area, the upper surface 591 of the neutral busbar 59 is located only slightly below the liquid surface 601 of the liquid resin material M0 in the immersed state. Therefore, it is difficult to quickly spread the liquid resin material M0 over the upper surface 591.

In this manufacturing method, however, it is possible to quickly spread the liquid resin material M0 over the upper surface 591 of the neutral busbar 59 by executing the rotation step in the immersed state.

Specifically, when the workpiece W is immersed in the immersion step so that the upper surface 591 is positioned slightly below the liquid surface 601 of the liquid resin material M0, the liquid resin material M0 flows from the outer peripheral edges of the neutral busbar 59 to the upper surface 591 of the neutral busbar 59 as schematically shown by arrows R91 and R92 in FIG. 9B. When the workpiece W is simply maintained in the immersed state, however, the flow rate is low and a relatively long period is required to spread the liquid resin material M0 over the entire upper surface 591 because of the relatively high viscosity of the liquid resin material M0 as described above. The liquid resin material M0 may have difficulty in flowing onto the upper surface 591 due to surface tension. In such a case, a relatively long period is required to spread the liquid resin material M0 over the entire upper surface 591.

With this manufacturing method, the liquid resin material M0 easily flows from the outer peripheral edges of the neutral busbar 59 to the upper surface 591 of the neutral busbar 59 by executing the rotation step in the immersed state. For example, when the workpiece W is rotated to the L1 side in the circumferential direction in FIG. 9B, the flow of the liquid resin material M0 in the direction of arrow R91 (flow of the liquid resin material M0 on the upper surface 591 of the neutral busbar 59) is promoted. When the workpiece W is rotated to the L2 side in the circumferential direction in FIG. 9B, the flow of the liquid resin material M0 in the direction of arrow R92 (flow of the liquid resin material M0 on the upper surface 591 of the neutral busbar 59) is promoted. As a result, it is possible to efficiently guide the liquid resin material M0 onto the upper surface 591 of the neutral busbar 59 compared to the case where the workpiece W is simply maintained in the immersed state. Thus, the CT can be reduced.

In this manufacturing method, the rotation step in the immersed state may be achieved only by rotation of the workpiece W in one direction (either the rotation to the L1 side in the circumferential direction or the rotation to the L2 side in the circumferential direction), or may be achieved by rotation of the workpiece W in two directions (both the rotation to the L1 side in the circumferential direction and the rotation to the L2 side in the circumferential direction). When this is achieved by rotation of the workpiece W in two directions, the liquid resin material M0 can be guided onto the upper surface 591 of the neutral busbar 59 from both circumferential sides of the neutral busbar 59 as described above with reference to FIG. 9B (see arrows R91 and R92). Therefore, it is possible to quickly spread the liquid resin material M0 over the entire upper surface 591 (see FIG. 9C).

In this manufacturing method, the workpiece W in the immersed state is rotated about the central axis I to efficiently guide the liquid resin material M0 onto the upper surface 591 of the neutral busbar 59. Instead of or in addition to this, the workpiece W in the immersed state may be rocked, translated, moved by combining these motions, or moved in any other way to efficiently guide the liquid resin material M0 onto the upper surface 591 of the neutral busbar 59. When the workpiece W is translated, the translation may be achieved by maintaining the central axis I of the workpiece W parallel to the vertical direction, or may be achieved by slightly inclining the central axis I of the workpiece W with respect to the vertical direction.

In this manufacturing method, regarding the rotation step in the immersed state, the rotation about the central axis I of the workpiece W is achieved by maintaining the central axis I of the workpiece W parallel to the vertical direction, but the rotation is not limited to this. For example, the rotation about the central axis I of the workpiece W may be achieved by slightly inclining the central axis I of the workpiece W with respect to the vertical direction. In this case, the inclination angle may be changed depending on the rotation position and/or the rotation angle of the workpiece W.

In this manufacturing method, the rotation angle (rotation stroke) in the rotation step in the immersed state is any rotation angle, but is preferably 90 degrees or more, more preferably 180 degrees or more, and may be, for example, 360 degrees. For example, by setting the rotation angle to 360 degrees or less, the rotation step in the immersed state can be achieved even when a robot with a limited range of motion is used.

In this manufacturing method, regarding the rotation step in the immersed state, the rotation about the central axis I of the workpiece W is executed in a state in which the upper surface 591 of the neutral busbar 59 is positioned below the liquid surface 601 of the liquid resin material M0, but the rotation is not limited to this. For example, regarding the rotation step in the immersed state, the rotation about the central axis I of the workpiece W may be executed in a state in which the upper surface 591 of the neutral busbar 59 coincides with the liquid surface 601 of the liquid resin material M0. The rotation about the central axis I of the workpiece W may be executed while changing a height difference between the upper surface 591 of the neutral busbar 59 and the liquid surface 601 of the liquid resin material M0 (see dimension H1 in FIG. 9A). For example, in the process of immersing the workpiece W, the rotation of the workpiece W may be started from a state before the workpiece W is most immersed (e.g., H1 = 0 or negative).

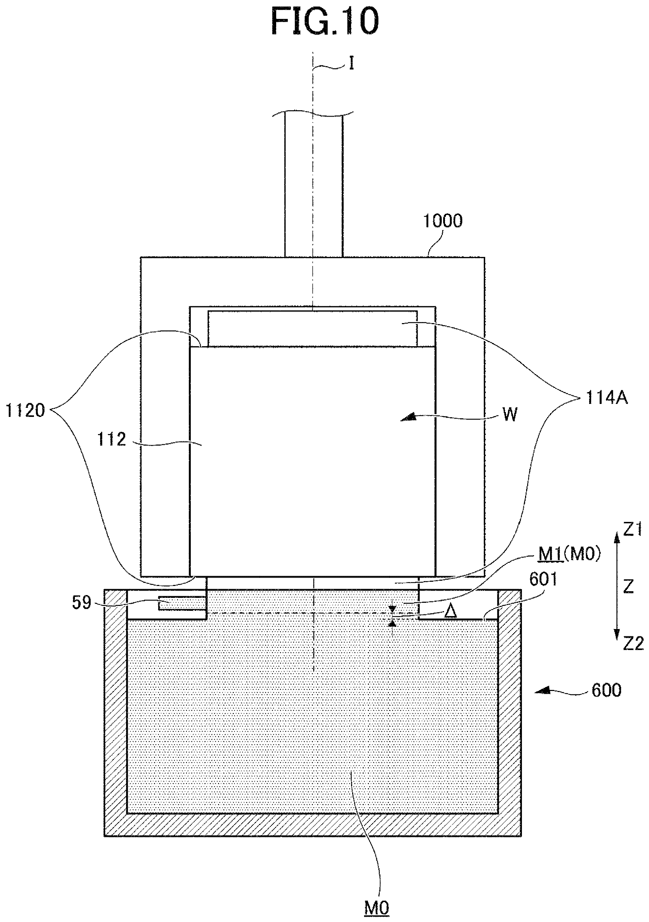

Next, this manufacturing method includes a lifting step (step S210) in which the workpiece W is slightly lifted from the bath 600. Hereinafter, the lifting step of step S210 will also be referred to as "lifting step up to vicinity of liquid surface" for the sake of distinction from further lifting described later. The workpiece W may be lifted by the workpiece gripping portion 1000 of the manufacturing device. FIG. 10 schematically shows the workpiece W in the downward posture that has been lifted slightly above the liquid surface 601. The lifted workpiece W in the downward posture has the liquid resin material M0 (schematically shown by hatched area M1 in FIG. 10) impregnated into the impregnation target area at the axial end (lower end in the downward posture).

Next, this manufacturing method includes a rotation step (step S211) in which the workpiece W in the downward posture that has been slightly lifted from the bath 600 is rotated about the central axis I of the workpiece W. Hereinafter, the rotation step of step S211 will also be referred to as "liquid-draining rotation step" for the sake of distinction from other rotation steps. In FIG. 11, the rotation in the liquid-draining rotation step is schematically shown by arrows R11A and R11B.

The liquid-draining rotation step is executed to quickly return, to the bath 600, the liquid resin material M0 dripping from the impregnation target area of the workpiece W in the downward posture. Specifically, when the workpiece W is lifted from the bath 600, the liquid resin material M0 drips from the impregnation target area of the workpiece W due to its own weight, but the liquid resin material M0 drips relatively slowly because it has a relatively high viscosity. In this case, the CT is likely to increase when the workpiece W is maintained in the downward posture and the liquid resin material M0 expected to drip is allowed to finish dripping. When the workpiece W is maintained in the downward posture for a relatively long period, an excessive amount of the liquid resin material M0 drips into the bath 600 in the liquid resin material M0 that has adhered to (has been impregnated into) the impregnation target area of the workpiece W. In this case, an unnecessary increase in the number of immersion steps executed for one workpiece W (and an increase in the CT along with it) occurs in order to ensure the necessary thickness of the liquid resin material M0.

In this manufacturing method, the liquid-draining rotation step is executed. Therefore, before the liquid resin material M0 finishes dripping from the impregnation target area of the workpiece W due to its own weight, the liquid resin material M0 that may drip from the impregnation target area of the workpiece W can be separated (divided) into a portion of the liquid resin material M0 that remains on the workpiece W and a portion of the liquid resin material M0 that returns to the bath 600.

Specifically, FIG. 12 shows a portion corresponding to part Q11 in FIG. 11 (the neutral busbar 59 is omitted from illustration). An upper state ST2110 is a state before the start of the liquid-draining rotation step, and a lower state ST2111 is a state during the liquid-draining rotation step. When the workpiece W is rotated from the state ST2110, a speed difference (speed difference in the rotation direction) (arrow R2111 in FIG. 12) occurs between the liquid resin material M0 adhering to the impregnation target area of the workpiece W and the liquid resin material M0 in the bath 600 as shown in the state ST2111. When the speed difference (speed gradient) occurs in the shear direction, the viscosity of the liquid resin material M0 decreases at the boundary of the speed difference. Therefore, a radially receding portion is formed between the portion of the liquid resin material M0 adhering to the workpiece W and the portion of the liquid resin material M0 in the bath 600. When this receding portion is formed, the free fall of the portion of the liquid resin material M0 below the receding portion is promoted. Therefore, when the workpiece W is further lifted with the receding portion formed, the liquid resin material M0 adhering to the impregnation target area of the workpiece W and the liquid resin material M0 in the bath 600 can be easily separated (divided) at the receding portion serving as the boundary.

In this way, with this manufacturing method, the liquid draining can be promoted by utilizing the speed difference (speed gradient) in the shear direction in the liquid-draining rotation step. Thus, it is possible to shorten the CT while minimizing the amount of the liquid resin material M0 dripping from the impregnation target area of the workpiece W. The number and frequency of generation of drooping portions M12 (liquid resin material M0 dripping in the form of "icicles") described later can be reduced, and the possibility of adhesion of the liquid resin material M0 to the stator core 112 can be reduced. As a result, the CT can be shortened.

In this manufacturing method, the liquid-draining rotation step may be achieved only by rotation of the workpiece W in one direction (either the rotation to the L1 side in the circumferential direction or the rotation to the L2 side in the circumferential direction), or may be achieved by rotation of the workpiece W in two directions (both the rotation to the L1 side in the circumferential direction and the rotation to the L2 side in the circumferential direction).

In this regard, the inclination direction of the overhang portions 54 of the coil pieces 52 on the radially outer side or the radially inner side at the coil end portion 114A may be taken into consideration. For example, FIG. 12A schematically shows four overhang portions 54 of the coil pieces 52 on the radially outer side. The inclination direction is a direction in which the upper side is located on the L2 side with respect to the lower side. In this case, when the workpiece W is rotated to the L2 side in the circumferential direction (see arrow R12B), the liquid resin material M0 impregnated between the overhang portions 54 is likely to flow axially outward from the coil end portion 114A (see arrows R12A). In this case, the liquid resin material M0 impregnated between the overhang portions 54 may be insufficient. Therefore, in the case of such an inclination direction of the overhang portions 54, the rotation direction in the liquid-draining rotation step may be a direction in which the workpiece W is rotated to the L1 side in the circumferential direction in order to avoid such inconvenience.

In the present embodiment, the workpiece W and the liquid surface 601 may have any vertical positional relationship when the liquid-draining rotation step is executed. However, the raised position of the workpiece W in the lifting step up to the vicinity of the liquid surface is preferably within a range in which the liquid resin material M0 adhering to the impregnation target area of the workpiece W and the liquid resin material M0 in the bath 600 are connected (continuous). More specifically, the vertical positional relationship between the workpiece W and the liquid surface 601 when the liquid-draining rotation step is executed is preferably such that the distance between the lower end position of the workpiece W (lowest position of the lower coil end portion 114A) and the liquid surface 601 is 10 mm or less, more preferably 5 mm or less, and most preferably about 1 mm to 3 mm. When the distance is more than 10 mm, the liquid resin material M0 dripping from the coil end portion 114A is likely to be scattered outside the bath 600 due to centrifugal force. Therefore, this case is not preferable. When the distance is less than 1 mm, it is difficult to form the above receding portion. Therefore, this case is not preferable.

In this manufacturing method, the rotation angle (rotation stroke) in the liquid-draining rotation step is any rotation angle, but is preferably 90 degrees or more, more preferably 180 degrees or more, and may be, for example, 360 degrees.

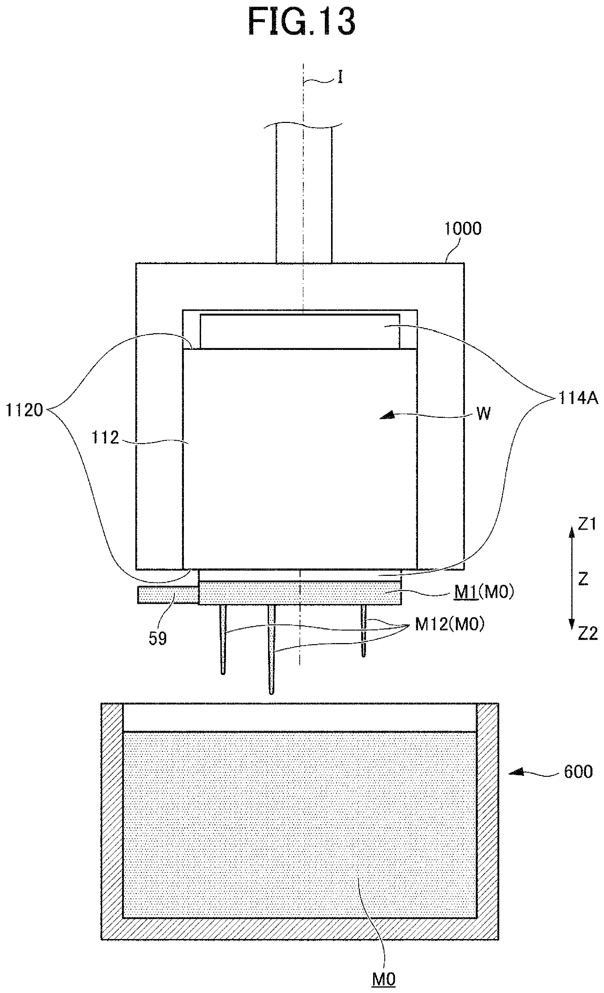

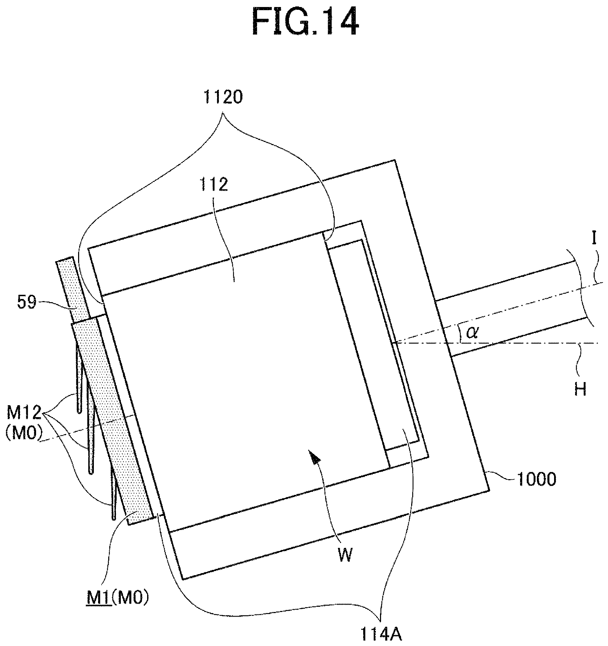

Next, this manufacturing method includes a step (step S212) of changing the posture of the workpiece W that has been further lifted from the bath 600 to an obliquely downward posture. FIG. 13 schematically shows the state of the workpiece W that has been lifted further upward from the height of the workpiece W during the liquid-draining rotation step (after the lifting step up to the vicinity of the liquid surface). FIG. 14 schematically shows the state of the workpiece W in the obliquely downward posture.

In this manufacturing method, the dripping of the liquid resin material M0 due to its own weight can be reduced by the liquid-draining rotation step as described above, but the dripping of the liquid resin material M0 due to its own weight may still occur. In FIGS. 13 and 14, the liquid resin material M0 dripping due to its own weight is represented by reference sign M12. Hereinafter, in the liquid resin material M0 impregnated into the impregnation target area of the workpiece W, the liquid resin material M0 dripping due to its own weight will also be referred to as a drooping portion M12, and the other portion will also be referred to as a normal portion M13. The drooping portion M12 is in the form of so-called "icicle" and tends not to fall immediately due to the relatively high viscosity of the liquid resin material M0 (i.e., tends to extend downward in the form of "icicle"). In FIG. 14 etc., a long dashed short dashed line H is a horizontal line.

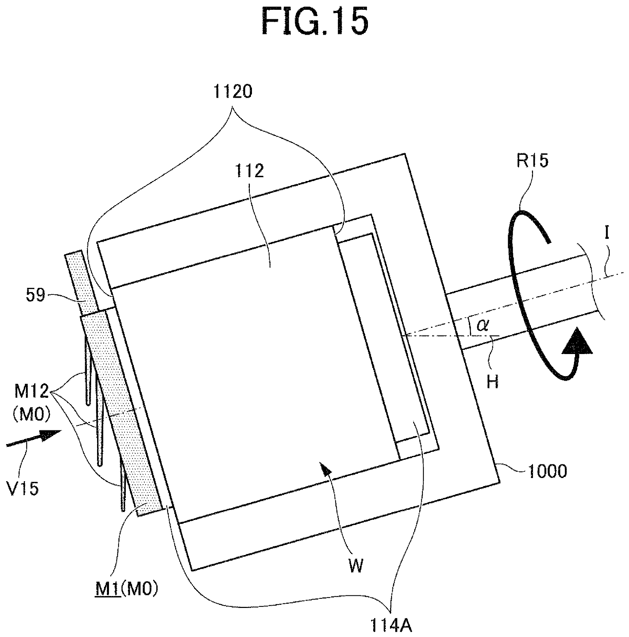

Next, this manufacturing method includes a rotation step (step S213) in which the workpiece W is rotated about the central axis I of the workpiece W. Hereinafter, the rotation step of step S213 will also be referred to as "re-adhesion rotation step" for the sake of distinction from other rotation steps. In FIG. 15, the rotation in the re-adhesion rotation step is schematically shown by arrow R15.

The re-adhesion rotation step includes rotating the workpiece W so that the drooping portion M12 is absorbed into the normal portion M13 (integrated with the normal portion M13 by adhering thereto). That is, the re-adhesion rotation step includes rotating the workpiece W so that the liquid resin material M0 dripping downward from one circumferential position in the impregnation target area (i.e., the drooping portion M12) adheres to another circumferential position in the impregnation target area.

The principle etc. of the re-adhesion rotation step will be described with reference to FIGS. 16A to 16C. FIGS. 16A to 16C are plan views schematically showing the workpiece W when viewed along arrow V15 in FIG. 15.

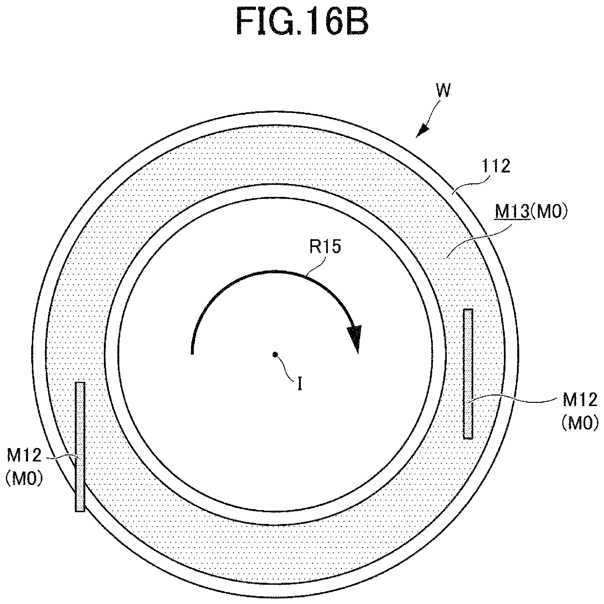

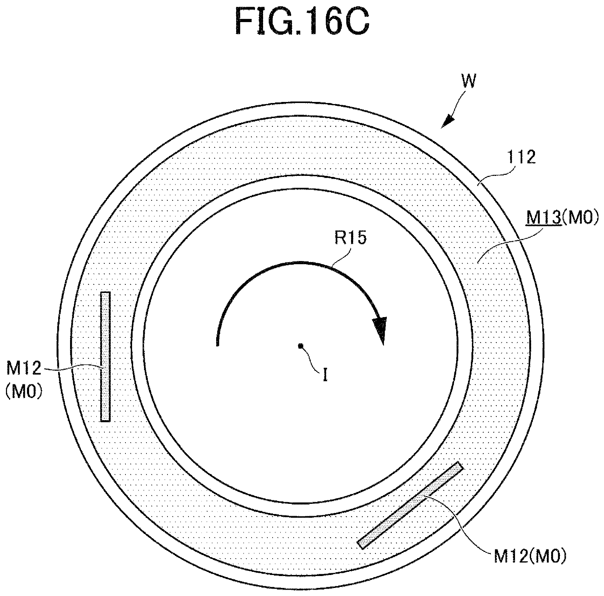

In the example shown in FIGS. 16A to 16C, two drooping portions M12 are absorbed into the normal portion M13. Specifically, when the workpiece W rotates clockwise from the state shown in FIG. 16A, the state changes to the state shown in FIG. 16B. The right drooping portion M12 is positioned to overlap the normal portion M13 when viewed along arrow V15. Also at this time, the workpiece W is in the obliquely downward posture (see FIG. 15), but the entire drooping portion M12 is absorbed into the normal portion M13 such that the drooping portion M12 is absorbed into the normal portion M13 from the root side of the drooping portion M12 by the rotation of the workpiece W due to the relatively high viscosity of the liquid resin material M0. Similarly, when the workpiece W further rotates clockwise from the state shown in FIG. 16B, the state changes to the state shown in FIG. 16C. The left drooping portion M12 is positioned to overlap the normal portion M13 when viewed along arrow V15. Also at this time, the workpiece W is in the obliquely downward posture (see FIG. 15), but the entire drooping portion M12 is absorbed into the normal portion M13 such that the drooping portion M12 is absorbed into the normal portion M13 from the root side of the drooping portion M12 by the rotation of the workpiece W due to the relatively high viscosity of the liquid resin material M0.

**In** this way, when each drooping portion M12 reaches a rotation position where it overlaps the normal portion M13 when viewed along arrow V15, the entire drooping portion M12 is absorbed into the normal portion M13. As a result, each drooping portion M12 disappears. It is possible to prevent inconvenience that may occur when the posture of the workpiece W is changed to the upward posture while the drooping portion M12 remains. Specifically, when the posture of the workpiece W is changed to the upward posture in next step S214 while the drooping portion M12 remains, the drooping portion M12 may adhere to the stator core 112. For example, the drooping portion M12 may adhere to the axial end face 1120 (upper end face) of the stator core 112. In this case, the liquid resin material M0 adhering to the stator core 112 needs to be removed separately using a scraper etc. With this manufacturing method, such inconvenience can be reduced and the CT can be shortened as described above.

In this manufacturing method, each drooping portion M12 is not removed from the workpiece W, but is returned to the impregnation target area of the workpiece W such that it is integrated with the normal portion M13. Therefore, each drooping portion M12 can be eliminated without reducing the amount of the liquid resin material M0 impregnated into the impregnation target area of the workpiece W. Specifically, when each drooping portion M12 is removed from the workpiece W, the amount of the liquid resin material M0 that has adhered to (has been impregnated into) the impregnation target area of the workpiece W decreases accordingly. In this case, an unnecessary increase in the number of immersion steps executed for one workpiece W (and an increase in the CT along with it) occurs in order to ensure the necessary thickness of the liquid resin material M0. With this manufacturing method, such inconvenience can be prevented and the CT can be shortened.

In this manufacturing method, the re-adhesion rotation step may be achieved only by rotation of the workpiece W in one direction (e.g., either clockwise or counterclockwise rotation in the view along arrow V15), or may be achieved by rotation of the workpiece W in two directions. The rotation angle (rotation stroke) in the re-adhesion rotation step is any rotation angle, but is preferably 90 degrees or more, and more preferably 180 degrees or more.

Although the above description has focused mainly on the drooping portion M12 generated from the coil end portion 114A, the same effects can be obtained by the re-adhesion rotation step for a similar drooping portion M12 generated from the neutral busbar 59.

In this manufacturing method, in the re-adhesion rotation step, the workpiece W in the obliquely downward posture may still be positioned above the bath 600 while facing the bath 600 in the vertical direction. That is, the workpiece W in the obliquely downward posture may be formed such that the impregnation target area of the workpiece W overlaps the bath 600 when viewed in the vertical direction. In this case, even if the drooping portion M12 falls off the workpiece W, it can return to the bath 600. Thus, it is possible to prevent a decrease in the yield of the liquid resin material M0 caused by the fall of the drooping portion M12.

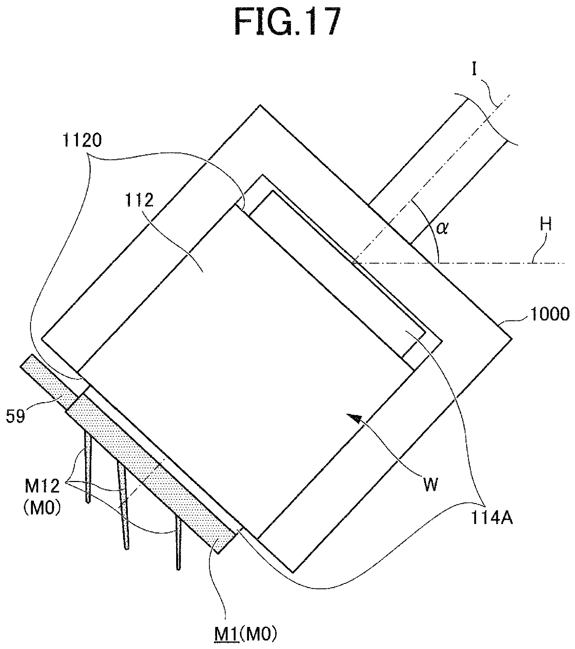

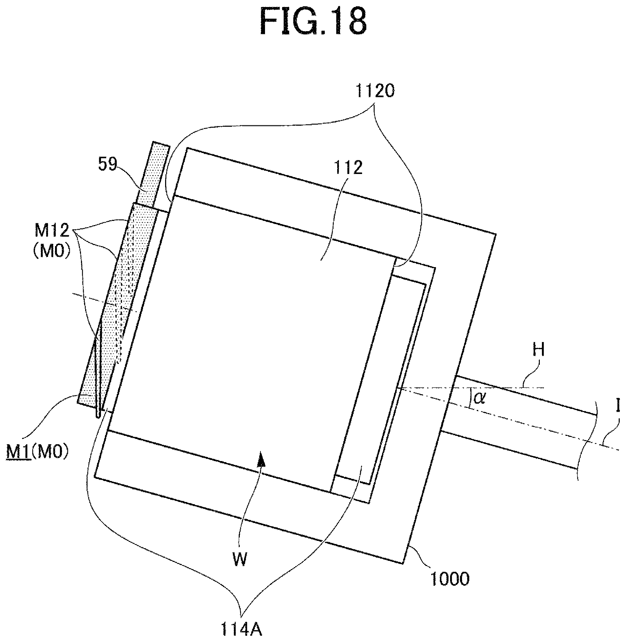

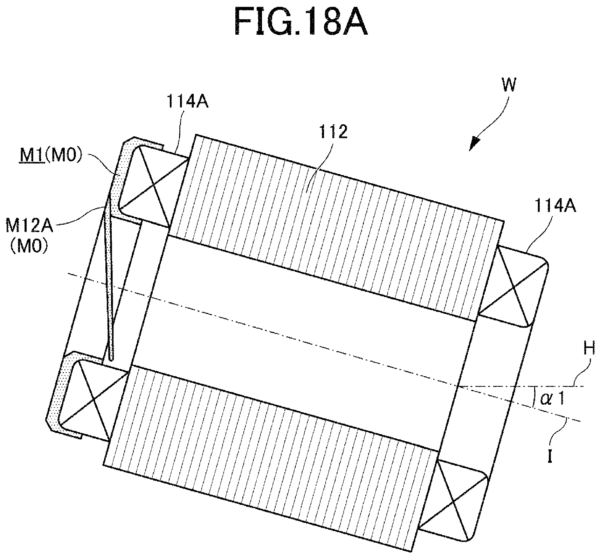

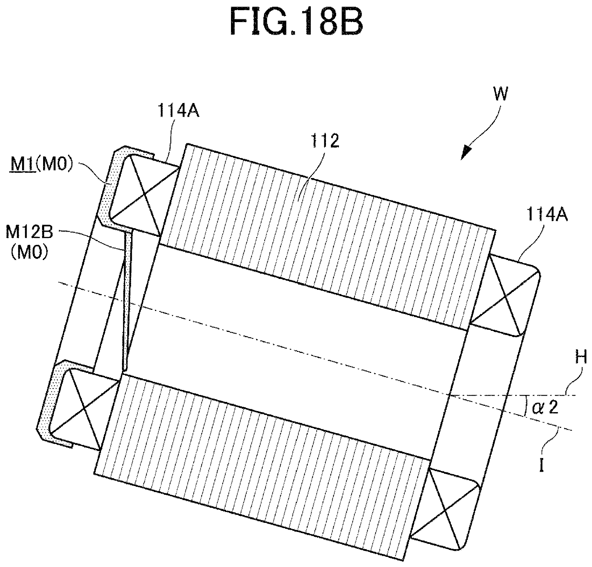

In this manufacturing method, the re-adhesion rotation step is executed for the workpiece W in the obliquely downward posture. An angle α of the obliquely downward posture (see FIG. 15) is preferably relatively small. For example, when the angle α exceeds 45 degrees, as schematically shown in FIG. 17, the drooping portion M12 is likely to fall downward when the workpiece W is rotated (or simply rotates in the form of an icicle). Therefore, the re-adhesion described above is difficult. When the re-adhesion rotation step is executed for the workpiece W in an obliquely upward posture, the drooping portion M12 is likely to adhere to the stator core 112 as schematically shown in FIG. 18. For example, the drooping portion M12 dripping from a circumferential position below the central axis I is likely to adhere to the axial end face 1120 of the stator core 112 on the radially outer side of the slots 23. The drooping portion M12 dripping from a circumferential position above the central axis I is likely to adhere to the axial end face 1120 or the inner peripheral surface of the stator core 112 on the radially inner side of the slots 23. This tendency is noticeable when the angle α of the obliquely downward posture exceeds -20 degrees on the negative side. The angle α is positive in the direction in which the impregnation target area is in the downward posture. Therefore, the angle α of the obliquely downward posture (see FIG. 15) is preferably less than 45 degrees and more than -20 degrees.
Alternatively, the lower limit value of the negative angle α related to the obliquely upward posture may be determined from the viewpoint shown in FIGS. 18A and 18B. Since the posture is the "obliquely upward posture" in the example shown in FIGS. 18A and 18B, the sign of the angle α is "negative." FIGS. 18A and 18B are schematic sectional views (sectional views taken along a cross section passing through the central axis I) of the workpiece W in the obliquely upward posture in the re-adhesion rotation step, and show different drooping portions M12 (referred to as "drooping portion M12A" and "drooping portion M12B" for the sake of distinction). The drooping portion M12A shown in FIG. 18A drips vertically downward from the upper side of the impregnation target area (side farther from the stator core 112 in the axial direction), and its lower end faces a non-impregnation target area of the coil end portion 114A (portion closer to the stator core 112 in the axial direction) in the axial direction. In this case, when the drooping portion M12A drips, the liquid resin material M0 adheres to the non-impregnation target area of the coil end portion 114A. In order to prevent such adhesion, the negative angle α related to the obliquely upward posture is preferably set more (closer to 0 degrees) than an angle α1 (see FIG. 18A) when the drooping portion M12A faces the non-impregnation target area of the coil end portion 114A in the axial direction. The drooping portion M12B shown in FIG. 18B drips vertically downward from the lower side of the impregnation target area (side closer to the stator core 112 in the axial direction), and its lower end faces the inner peripheral surface of the stator core 112. In this case, when the drooping portion M12B drips, the liquid resin material M0 adheres to the inner peripheral surface of the stator core 112. In order to prevent such adhesion, the negative angle α related to the obliquely upward posture is preferably set more (closer to 0 degrees) than an angle α2 (see FIG. 18B) when the drooping portion M12B faces the inner peripheral surface of the stator core 112 in the axial direction. The magnitude relationship between the angle α1 and the angle α2 may vary depending on the shape of the coil end portion 114A, the range of the impregnation target area, etc. Therefore, the negative angle α related to the obliquely upward posture may be preferably set equal to or more than the larger one of the angles α1 and α2.

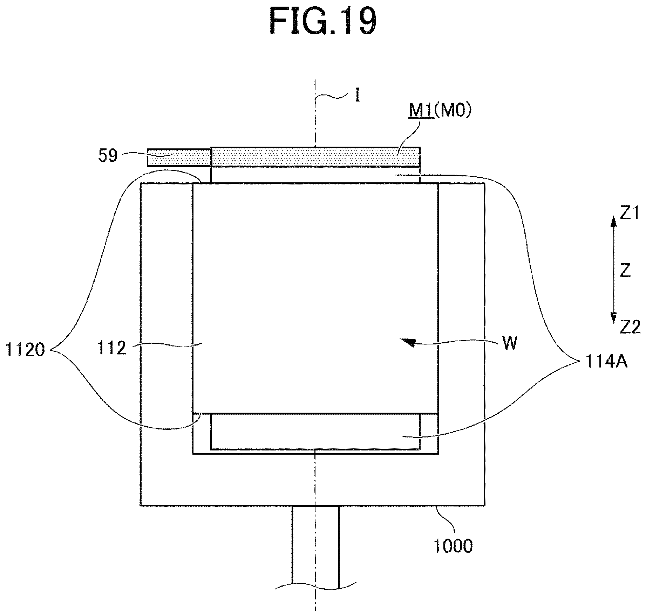

Next, this manufacturing method includes an inversion step (step S214) in which the posture of the workpiece W is set to the upward posture. That is, the posture of the workpiece W is changed from the downward posture to the upward posture via the obliquely downward posture. FIG. 19 schematically shows the workpiece W in the upward posture.

When the posture of the workpiece W lifted from the bath 600 is inverted upside down in the inversion step (step S214) without executing the above re-adhesion rotation step, the drooping portion M12 may adhere to the axial end face 1120 (upper end face) of the stator core 112. In this case, the liquid resin material M0 adhering to the stator core 112 needs to be removed separately using a scraper etc. In this manufacturing method, as described above, the drooping portion M12 disappears (is absorbed into the normal portion M13) in the re-adhesion rotation step before the posture is set to the upward posture. Thus, such inconvenience can be reduced.

Next, this manufacturing method includes an upper surface resin curing step (step S216) in which resin curing treatment is executed for the liquid resin material M0 on the upper surface of the impregnation target area of the workpiece W in the upward posture. Hereinafter, the resin curing treatment related to the upper surface resin curing step will also be referred to as "upper surface resin curing treatment."

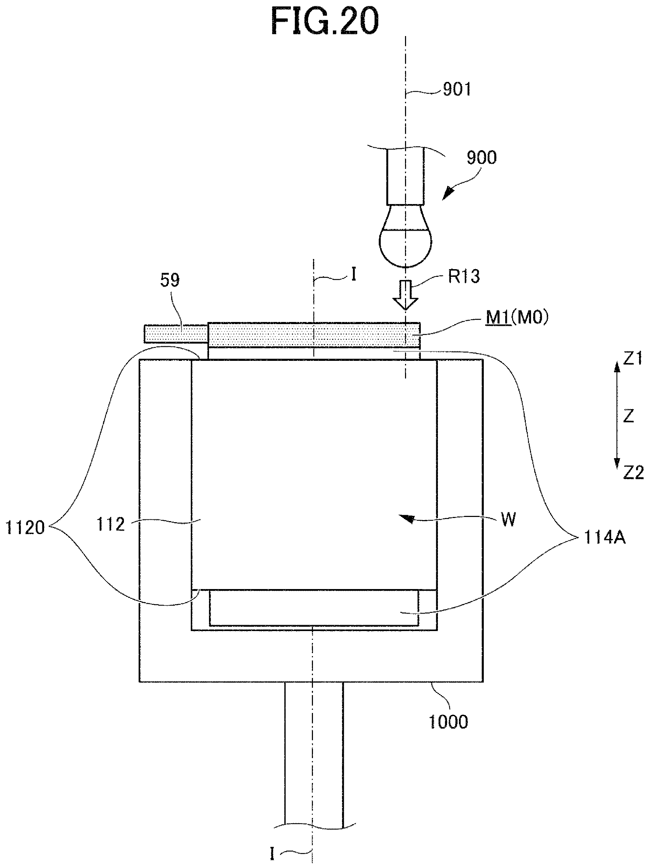

In this manufacturing method, the upper surface resin curing treatment includes irradiating the upper surface of the impregnation target area of the workpiece W with ultraviolet light. FIG. 20 schematically shows the state in which the upper surface resin curing treatment is being executed. In the example shown in FIG. 20, an ultraviolet radiation device 900 irradiates the upper surface of the impregnation target area of the workpiece W with ultraviolet light (see arrow R13). Thus, the upper portion (mainly the upper surface portion) of the liquid resin material M0 impregnated into the impregnation target area of the workpiece W is cured.

The ultraviolet radiation device 900 preferably irradiates the upper surface of the impregnation target area of the workpiece W with ultraviolet light over the entire circumference. Thus, the liquid resin material M0 in the upper portion can be cured over the entire circumference of the impregnation target area. In this case, the workpiece W may be rotated about the central axis I, or the ultraviolet radiation device 900 may be rotated. Alternatively, a plurality of ultraviolet radiation devices 900 may be distributed above the workpiece W in a circular pattern.

The ultraviolet radiation device 900 is preferably positioned relative to the workpiece W so that an optical axis 901 is substantially perpendicular to the upper surface of the impregnation target area of the workpiece W. That is, the ultraviolet radiation device 900 is preferably positioned relative to the workpiece W so that the optical axis 901 is positioned within a substantially vertical plane. The term "substantially" is a concept that includes a deviation of, for example, 10% or less. The ultraviolet radiation device 900 is preferably positioned relative to the workpiece W so that the optical axis 901 passes through the impregnation target area of the workpiece W, and is more preferably positioned relative to the workpiece W so that the optical axis 901 passes in the vicinity of the center of the radial range of the impregnation target area of the workpiece W (range from the radially innermost position to the radially outermost position). In this case, the liquid resin material M0 in the upper portion of the impregnation target area of the workpiece W can be efficiently cured.

In this way, with this manufacturing method, the workpiece W in the upward posture is cured in the upper portion (axial end) of the liquid resin material M0 impregnated into the impregnation target area. Therefore, it is possible to reduce the inconvenience that may occur when the upper surface resin curing treatment is executed for the workpiece W lifted from the bath 600 while it is in the downward posture. Specifically, when the resin curing treatment is executed for the lower surface of the impregnation target area of the workpiece W lifted from the bath 600 while it is in the downward posture, the liquid resin material M0 impregnated into the impregnation target area of the workpiece W may be cured while dripping downward due to its own weight. In this case, the liquid resin material M0 that is being cured may return to the bath 600 to affect the fluidity of the liquid resin material M0 in the bath 600. In this manufacturing method, the upper surface resin curing treatment is executed in the upward posture as described above. Thus, such inconvenience can be reduced.

In this manufacturing method, by curing the upper portion (axial end) of the liquid resin material M0 impregnated into the impregnation target area, a thin film of the liquid resin material M0 can be formed at the corners of the rectangular cross section of the coupling portion 40 (see FIG. 5; hereinafter referred to as "joint edges 122"). That is, even at the joint edge 122 having difficulty in forming the liquid resin material M0 due to the effect of wettability etc. around the coil piece 52, the film of the liquid resin material M0 can be formed though it is relatively thin. The joint edge 122 where the film of the liquid resin material M0 is formed has high wettability due to the film. In this way, the wettability (wettability related to the liquid resin material M0) of the joint edge 122 can be increased. As a result, in the subsequent second immersion step (described later), it becomes easier to ensure the necessary thickness of the insulating coating (cured product of the liquid resin material M0) on the joint edge 122 of the coil piece 52. That is, in the second immersion step, a relatively thick film can be formed also at the joint edge 122 using, as a base, the film of the liquid resin material M0 formed in the first immersion step.

Next, this manufacturing method includes a radially inner resin curing step (step S218) in which resin curing treatment is executed for the liquid resin material M0 on the radially inner side surface of the impregnation target area of the workpiece W inverted into the upward posture. Hereinafter, the resin curing treatment related to the radially inner resin curing step will also be referred to as "radially inner resin curing treatment" for the sake of distinction from the above upper surface resin curing treatment.

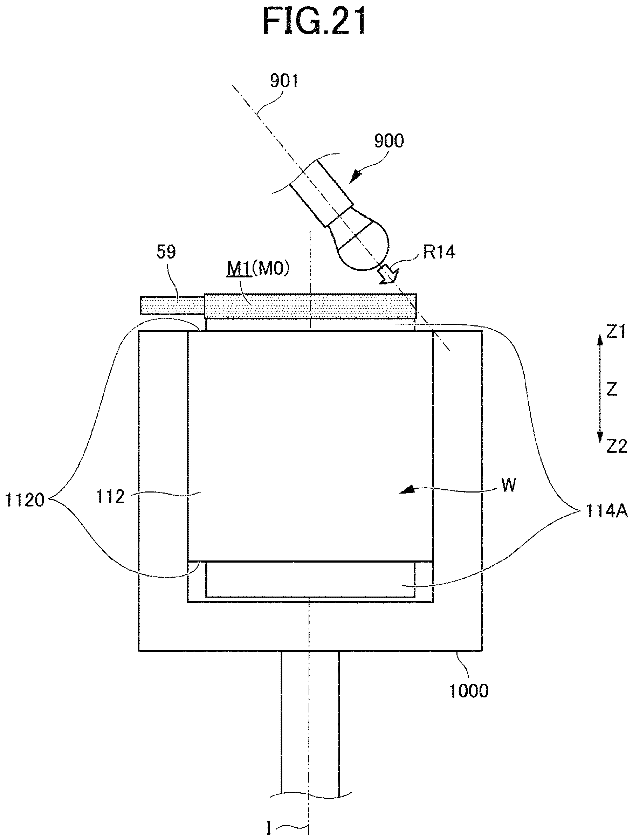

In this manufacturing method, the radially inner resin curing treatment includes irradiating the radially inner side surface of the impregnation target area of the workpiece W with ultraviolet light. FIG. 21 schematically shows the state in which the radially inner resin curing treatment is being executed. In the example shown in FIG. 21, the ultraviolet radiation device 900 irradiates the radially inner side surface of the impregnation target area of the workpiece W with ultraviolet light (see arrow R14). Thus, the radially inner portion (mainly the surface portion) of the liquid resin material M0 impregnated into the impregnation target area of the workpiece W is cured. The ultraviolet radiation device 900 may be the same as the ultraviolet radiation device 900 used in the above upper surface resin curing treatment.

The ultraviolet radiation device 900 preferably irradiates the radially inner side surface of the impregnation target area of the workpiece W with ultraviolet light over the entire circumference. Thus, the liquid resin material M0 in the radially inner portion can be cured over the entire circumference of the impregnation target area. In this case, the radially inner resin curing treatment may be executed sequentially in parallel with the upper surface resin curing treatment. Specifically, the upper surface resin curing treatment and the radially inner resin curing treatment may be executed together for each divided circumferential range on the entire circumference of the impregnation target area of the workpiece W. Alternatively, the radially inner resin curing treatment may be executed before the upper surface resin curing treatment.

The ultraviolet radiation device 900 is preferably positioned relative to the workpiece W so that the optical axis 901 is substantially perpendicular to the radially inner side surface of the impregnation target area of the workpiece W. That is, the ultraviolet radiation device 900 is preferably positioned relative to the workpiece W so that the optical axis 901 is positioned within a substantially vertical plane. The term "substantially" is a concept that includes a deviation of, for example, 10% or less. The ultraviolet radiation device 900 is preferably positioned relative to the workpiece W so that the optical axis 901 passes through the impregnation target area of the workpiece W, and is more preferably positioned relative to the workpiece W so that the optical axis 901 passes in the vicinity of the axial center of the impregnation target area of the workpiece W. In this case, the liquid resin material M0 in the portion of the radially inner side surface of the impregnation target area of the workpiece W can be efficiently cured.

Depending on the size of the ultraviolet radiation device 900 and the radially inner space of the workpiece W, the ultraviolet radiation device 900 may be positioned relative to the workpiece W such that the optical axis 901 obliquely intersects the radially inner side surface of the impregnation target area of the workpiece W as shown in FIG. 21. In this case, one of the radially inner resin curing treatment and the upper surface resin curing treatment may serve as the other.

When the radially inner resin curing step (step S218) by the radially inner resin curing treatment is completed, the current insulating coating step is completed.

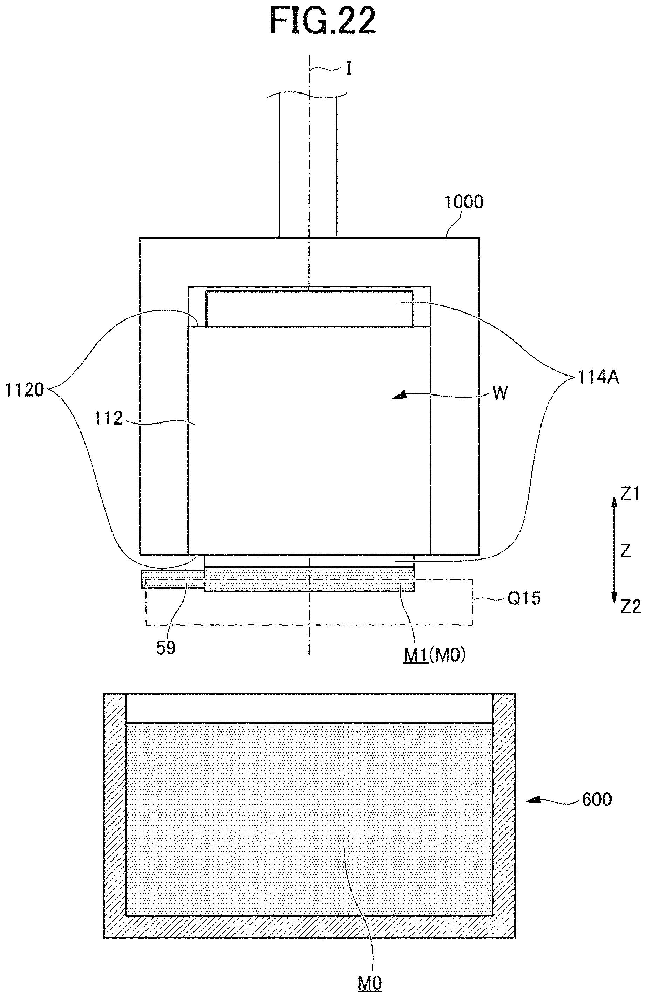

Next, in this manufacturing method, determination is made as to whether the number of times the insulating coating step has been executed for one workpiece W has reached a predetermined number of times (e.g., twice in this manufacturing method) (step S220). Such determination may be made by a person or may be made by image processing etc. When the determination result is "YES," the process proceeds to the next step. Otherwise, steps S206 to S218 are similarly executed to execute the second insulating coating step. FIG. 22 schematically shows the workpiece W that has been inverted upside down into the downward posture in step S206 in the second insulating coating step. Then, the workpiece W undergoes the second immersion step etc.

The second insulating coating step may be completely the same as the first insulating coating step. In this case, for example, the control on the manufacturing device can be simplified.

The second insulating coating step preferably differs from the first insulating coating step in terms of at least the immersion step. Specifically, the impregnation target area is reduced in the immersion step of the second insulating coating step compared to the immersion step of the first insulating coating step. That is, the impregnation target area related to the second immersion step may be part of the impregnation target area related to the first immersion step (part on the axial end side). In this case, the impregnation target area related to the second immersion step may be a minimum area including the joint edges 122 of the coil pieces 52. Thus, an insulating coating (cured product of the liquid resin material M0) having necessary functions can be efficiently formed using a relatively small amount (e.g., a minimum amount) of the liquid resin material M0.

FIG. 22 schematically shows a range Q15 including the impregnation target area related to the second insulating coating step relative to the range (hatched area M1) of the liquid resin material M0 impregnated into the workpiece W in the first insulating coating step.

In this way, in this manufacturing method, the insulating coating step is executed multiple times (e.g., twice in this manufacturing method). Thus, it is possible to ensure the necessary thickness of the insulating coating (cured product of the liquid resin material M0) on the joint edge 122 of the coil piece 52.

This manufacturing method includes, when the second insulating coating step is completed, a heating step (step S222) in which the workpiece W is heated so that the liquid resin material M0 in the entire workpiece W is cured. This heating step has a function of completely curing a portion of the liquid resin material M0 that has not been cured in the various resin curing steps described above (e.g., a portion on the inner side of the surface). The heating method in the heating step may be any method, and may be achieved, for example, by placing the workpiece W in a furnace. The liquid resin material M0 impregnated into the impregnation portion including the impregnation target area of the workpiece W is completely cured by heating. Thus, the insulating coating of the liquid resin material M0 is formed on the stator coil 114.

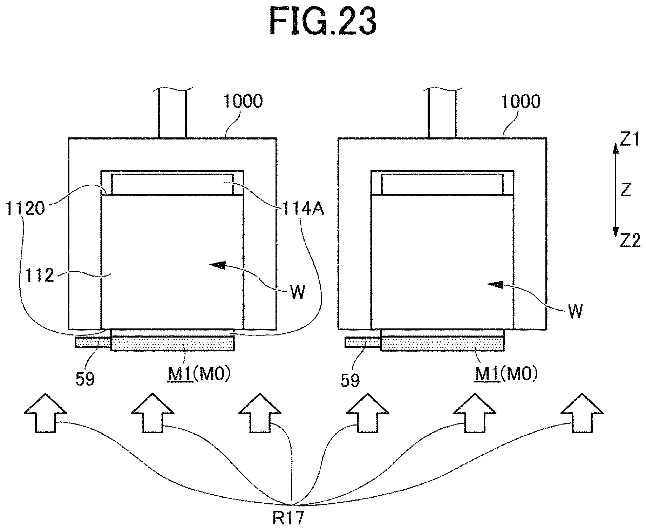

The posture of the workpiece W in the heating step may be any posture, and is preferably the downward posture as schematically shown in FIG. 23. FIG. 23 schematically shows a plurality of workpieces W that is undergoing the heating step while being arranged side by side in the downward posture. FIG. 23 schematically shows some workpiece gripping portions 1000 of the manufacturing device clamping the plurality of workpieces W. The workpieces W may be supported on a table such that the end face of the stator core 112 is in contact with the upper surface (not shown) of the table. In the figure, as an example, heat is radiated from below the workpieces W (see arrows R17), but the direction of heat radiation may be any direction.

In the heating step, in the case of the upward posture, the liquid resin material M0 that is in the process of being cured and has not been completely cured yet may drip downward onto the stator core 112 due to its own weight. In this case, the liquid resin material M0 adhering to the stator core 112 needs to be removed separately using a scraper etc.

In the case of the downward posture, even if the liquid resin material M0 that is in the process of being cured and has not been completely cured yet moves downward due to its own weight, it will not reach the stator core 112. The portion of the liquid resin material M0 that has been cured by the upper surface resin curing treatment and the radially inner resin curing treatment functions as a "bottom lid." Thus, it is possible to reduce the possibility that the dripping liquid resin material M0 turns into the form of icicles. That is, the downward movement of the liquid resin material M0 in the process of being cured is blocked by the portion of the liquid resin material M0 that has been cured by the upper surface resin curing treatment and the radially inner resin curing treatment. Thus, it is possible to prevent the inconvenience that may occur when the heating step is executed in the downward posture.

In this way, with this manufacturing method, the dripping of the liquid resin material M0 onto the stator core 112 can be prevented by executing the heating step in the downward posture. Further, the icicle-shaped curing of the liquid resin material M0 dripping downward can be reduced by the "bottom lid" function of the portion of the liquid resin material M0 that has been cured by the upper surface resin curing treatment and the radially inner resin curing treatment. Similar radially outer resin curing treatment may be executed instead of or in addition to the radially inner resin curing treatment.

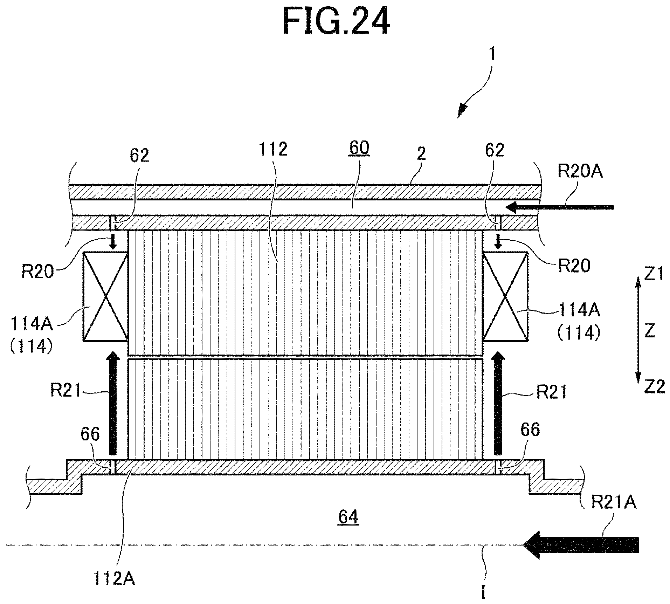

Next, a cooling structure suitable for a rotary electric machine 1 incorporating the stator 10 for the rotary electric machine that is manufactured by this manufacturing method will be described with reference to FIG. 24.

FIG. 24 is a diagram schematically showing an example of the cooling structure, and is a diagram schematically showing part of the sectional structure of the rotary electric machine 1.

In the example shown in FIG. 24, oil is supplied to the coil end portions 114A at both axial ends of the stator coil 114 from the radially outer side and the radially inner side. Specifically, oil supplied to a case internal oil passage 60 of a case 2 (see arrow R20A) is supplied to the radially outer side surfaces of the coil end portions 114A (see arrows R20) via oil holes 62 extending radially inward. The oil hole 62 may be disposed on the upper side in the vertical direction so as to promote dripping of oil by gravity. Oil supplied to an axial oil passage 64 of a rotor shaft 112A (see arrow R21A) is supplied to the radially inner side surfaces of the coil end portions 114A (see arrows R21) via oil holes 66 extending radially outward.

With this manufacturing method, as described above, the coil end portion 114A of the stator coil 114 is provided with the insulating coating of the liquid resin material M0. The portion of the stator coil 114 provided with the insulating coating of the liquid resin material M0 has lower thermal conductivity than the portion that is not provided with the insulating coating (i.e., the portion where the insulating film 130 is the surface). Therefore, if the exposed range of the radially outer side surface of the coil end portion 114A that is not covered with the insulating coating of the liquid resin material M0 is unnecessarily narrow, the cooling performance of the oil from the above oil hole 62 may unnecessarily decrease. Similarly, if the exposed range of the radially inner side surface of the coil end portion 114A that is not covered with the insulating coating of the liquid resin material M0 is unnecessarily narrow, the cooling performance of the oil from the above oil hole 66 may decrease.

In this regard, with this manufacturing method, the drooping portion M12 of the liquid resin material M0 impregnated into the impregnation target area is reduced by the re-adhesion rotation step as described above. Therefore, even if the workpiece W is then in the upward posture, the liquid resin material M0 on the radially outer side is less likely to drip downward. Thus, it is possible to reduce the possibility that the exposed range of the radially outer side surface of the coil end portion 114A that is not covered with the insulating coating of the liquid resin material M0 is unnecessarily narrow. As a result, the cooling performance for the coil end portion 114A by the oil from the above oil hole 62 can be effectively increased.

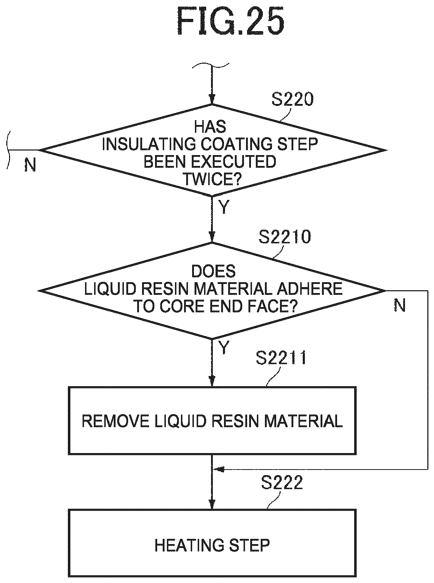

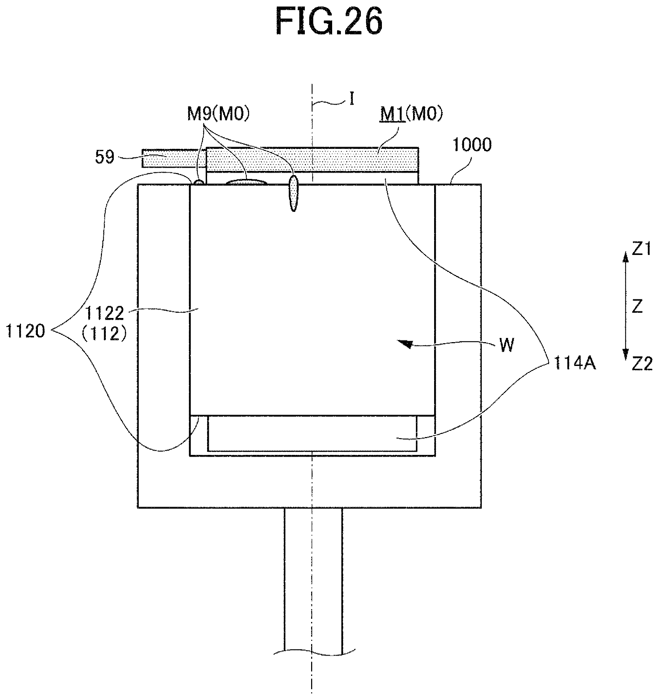

Next, a more preferable manufacturing method will be described with reference to FIGS. 25 and 26.

FIG. 25 is a schematic flowchart showing an example of another manufacturing method that may be executed instead of the manufacturing method described above with reference to FIG. 1.

The manufacturing method shown in FIG. 25 differs from the manufacturing method described above with reference to FIG. 1 in that steps S2210 and S2211 are added between steps S220 and S222.

This manufacturing method includes an inspection step (step S2210) for determining whether the liquid resin material M0 adheres to the axial end face 1120 of the stator core 112 after the insulating coating step has been executed ("YES" in step S220). Whether the liquid resin material M0 adheres may be determined based on a result of image processing for an image from a camera (not shown) that images the workpiece W. In this case, the determination may be made by visual inspection, may be made based on a predetermined algorithm, or may be made using artificial intelligence (machine learning etc.). In the case of artificial intelligence, a region to be determined (ROI: Region of Interest) within the image captured by the camera may also be determined based on the artificial intelligence. In this case, only harmful adhesion (e.g., adhesion over a range equal to or more than a threshold) may be detected.

In this inspection step, inspection may be made as to whether the liquid resin material M0 adheres to a portion other than the axial end face 1120 of the stator core 112 (e.g., the side surface of the stator core 112). An adherent M9 to a side surface 1122 of the stator core 112 often adheres also to the axial end face 1120. The adherent M9 may be detected at the same time by inspecting the adhesion to the axial end face 1120.

In FIG. 26, the liquid resin material M0 adhering to the axial end face 1120 of the stator core 112 is schematically shown as the adherent M9. The adherent M9 may be generated due to dripping from the coil end portion 114A or the neutral busbar 59 or due to the adhesion of the scattered liquid resin material M0.

In this manufacturing method, as described above, the possibility of the adhesion of the drooping portion M12 to the stator core 112 can be reduced by the liquid-draining rotation step (step S211) and the re-adhesion rotation step (step S213). When the liquid resin material M0 adheres for some reason, it can be detected by the inspection step.

This manufacturing method includes a step of removing the adherent M9 (step S2211) when adhesion of the liquid resin material M0 (i.e., the adherent M9) to the stator core 112 is detected In the inspection step. The method for removing the adherent M9 may be any method. For example, a scraper may be used. In this manufacturing method, the step of removing the adherent M9 is executed before the heating step (step S222). Therefore, the adherent M9 is easily removed, and can be removed, for example, by wiping with a rag. Specifically, even if the adherent M9 is exposed to ultraviolet light during the ultraviolet radiation step, the adherent M9 is in a partially cured state in which it is only cured to some extent and is still soft. Therefore, the adherent M9 is removed more easily than in the state in which it is completely cured by the heating step. For example, in the case of wiping with a rag, no damage is caused to the stator core 112 etc. and the workability is good unlike the case of using a scraper.

In this way, with this manufacturing method, the liquid resin material M0 adhering to the stator core 112 can be easily removed by executing the above inspection step before the heating step. In particular, when the liquid resin material M0 contains epoxy resin as a main component, the removal is difficult even with a scraper after it is cured in the heating step. Even if the resin can be removed with the scraper, the cured resin may scatter or break, and the removed material (resin residue) may adhere to the workpiece W as foreign matter. The scraper may damage (inflict damage on) the workpiece W (in particular, the stator core 112). With this manufacturing method, these inconveniences can be effectively avoided by executing the inspection step before the heating step as described above.

In this manufacturing method, the inspection step (step S2210) and the step of removing the adherent M9 (step S2211) are executed after the ultraviolet radiation step (step S216 or S218) related to the second insulating coating step, but may be executed before the ultraviolet radiation step (step S216 or S218) related to the second insulating coating step and after step S214. In this case, it is possible to reduce the possibility that the liquid resin material M0 is cured (though it is only cured to some extent as described above) due to the ultraviolet radiation in the ultraviolet radiation step (step S216 or S218) related to the second insulating coating step.

Although the embodiments are described in detail above, the present disclosure is not limited to the specific embodiments, and various modifications and changes can be made within the scope of the claims. It is also possible to combine all or part of the constituent elements of the embodiments described above.

For example, in the present embodiment, the liquid-draining rotation step (step S211) and the re-adhesion rotation step (step S213) are provided as described above. Therefore, it is possible to reduce or eliminate the liquid resin material M0 that may drip onto the stator core 112 when the workpiece W is inverted from the downward posture after the immersion step (step S208) to the upward posture (see step S214). Thus, in the present embodiment, it is possible to reduce or eliminate the need to irradiate the impregnation target area (e.g., the radially outer side of the impregnation target area) of the workpiece W lifted from the bath 600 with ultraviolet light while it is in the downward posture. In a modification, there may be added a step in which, after the liquid-draining rotation step of step S211, the workpiece W is slightly raised while it is in the downward posture and then the radially outer side of the impregnation target area is irradiated with ultraviolet light. In this case, subsequent steps S212 and S213 may be omitted.

In the embodiment described above, both the liquid-draining rotation step (step S211) and the re-adhesion rotation step (step S213) are executed as a preferable example, but the liquid-draining rotation step (step S211) may be omitted.

### Description of the Reference Numerals

1 ... rotary electric machine, 10 ... stator for rotary electric machine, 40 ... coupling portion (tip), 114 ... stator coil, 1140 ... axial end face, 112 ... stator core, 1120 ... axial end face, W ... workpiece, 52 ... coil piece, 59 ... neutral busbar, 600 ... bath, M0 ... liquid resin material, I ... central axis (stator central axis)

## Claims

1. A method for manufacturing a stator for a rotary electric machine, the method comprising:
a preparation step for preparing a workpiece in which a plurality of coil pieces forming a stator coil is attached to a stator core, the workpiece having tips of one of the coil pieces and another of the coil pieces joined together on one axial end side;
an immersion step for immersing, after the preparation step, the workpiece in a bath of a liquid resin material so that an impregnation target area including a joint between the tips is immersed; and
a rotation step for rotating, after the immersion step, the workpiece at a raised position of the workpiece where the impregnation target area is separated from the bath, wherein the rotation step includes rotating the workpiece about a workpiece central axis corresponding to a stator central axis in a posture of the workpiece in which the impregnation target area is oriented in a direction intersecting a vertical direction.

2. The method for manufacturing the stator for the rotary electric machine according to claim 1, wherein the rotation step includes rotating the workpiece so that the liquid resin material dripping downward from one circumferential position in the impregnation target area adheres to another circumferential position in the impregnation target area.

3. The method for manufacturing the stator for the rotary electric machine according to claim 2, wherein the posture in the rotation step includes a posture in which the impregnation target area is oriented obliquely downward and an angle between the workpiece central axis and a horizontal plane is 45 degrees or less.

4. he method for manufacturing the stator for the rotary electric machine according to claim 1, wherein
the liquid resin material has a characteristic that the liquid resin material is cured by being irradiated with ultraviolet light, and
the method further includes an irradiation step for irradiating the impregnation target area with the ultraviolet light after the rotation step.

5. The method for manufacturing the stator for the rotary electric machine according to any one of claims 1 to 4, wherein the raised position of the workpiece includes a position where the impregnation target area overlaps the bath when viewed in the vertical direction.
